# EUROPEAN PATENT SPECIFICATION

(11) **EP 2 841 506 B1**
(45) Date of publication and mention of the grant of the patent: **23.03.2016**
(21) Application number: 13720309.7
(22) Date of filing: 24.04.2013
(51) Int. Cl.: C09B 56/14, C09B 67/22, C11D 3/40, C09B 67/08

(54) **PHTHALOCYANINE PARTICLES AND THE USE THEREOF**
PHTHALOCYANINPARTIKEL UND IHRE VERWENDUNG
PARTICULES DE PHTALOCYANINE ET UTILISATION ASSOCIÉE

(30) Priority: 27.04.2012 US 201261639100 P; 27.04.2012 EP 12165875
(43) Date of publication of application: 04.03.2015
(73) Proprietor: BASF SE, 67056 Ludwigshafen (DE)
(72) Inventor: BRUHNS, Stefan, 68305 Mannheim (DE); SCHLINGLOFF, Gunther, 99974 Mühlhausen (DE); MENGE, Ullrich, 79639 Grenzach-Wyhlen (DE); BACHMANN, Frank, 79104 Freiburg (DE); LINDENMAIER, Andreas, 79585 Steinen (DE)
(74) Representative: Upschulte, Manfred Alois
(86) International application number: PCT/EP2013/058443
(87) International publication number: WO 2013/160328

(56) References cited:
- EP-A2- 0 323 407
- WO-A1-2005/014769
- WO-A2-2009/068513
- GB-A- 910 004
- GB-A- 1 385 636

## Description

The present invention relates to encapsulated phthalocyanine particles, comprising at least one water-soluble phthalocyanine compound and gelatine having a bloom strength of 2 to 80 as encapsulating material, to a process for the preparation thereof, compositions comprising such particles and washing agent formulations.

Water-soluble phthalocyanine complex compounds especially zinc and aluminium phthalocyanine sulphonates are frequently used as photo-activators in washing agent preparations.

A problem is seen in the fact that such photo-activators, despite their water-solubility, dissolve too slowly in water. Especially, in the event of inadequate mixing of the washing liquor, coloured photo-activators tend to stain the laundry.

It has now been found that the rate at which formulations of such phthalocyanines, particularly encapsulated phthalocyanines, dissolve in water can be improved by the use of gelatine with higher bloom strength as encapsulating material.

Therefore, the present invention relates to encapsulated phthalocyanine particles comprising
a) at least one water-soluble phthalocyanine compound, and
b) gelatine having a bloom strength of 2 to 80 as encapsulating material.

Suitable phthalocyanine compounds are water-soluble or at least water-dispersible phthalocyanine complex compounds with di-, tri- or tetra-valent coordination centres, particularly metal ions (complexes having a d⁰ or d¹⁰ configuration), as the central atom, to which the substituent of at least one mono-azo dye is attached.

Such phthalocyanine complex compounds correspond to the formula

(PC)-L-(D) (1),

to which the substituent of at least one mono-azo dye is attached by the linking group L,
Wherein
- PC: represents the Zn(II), Fe(II), Ca(II), Mg(II), Na(I), K(I), Al(III), Si(IV), P(V), Ti(IV) or Cr(VI) metal-containing phthalocyanine structure;
- D: represents the substituent of a mono-azo dye; and
- L: represents a group 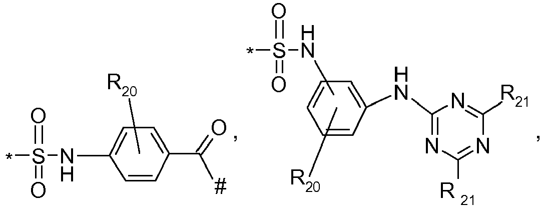 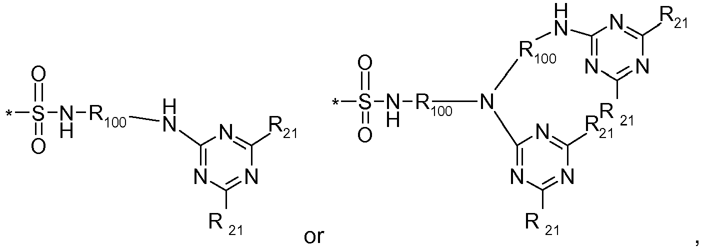 Wherein
R₂₀ represents hydrogen, C₁-C₈alkyl, C₁-C₈alkoxy or halogen;
R₂₁ represents D, hydrogen, OH, Cl or F, provided that at least one of R₂₁ is D;
R₁₀₀ represents C₁-C₈alkylene;
* marks the point of attachment of PC; and
# marks the point of attachment of the substituent D of the mono-azo dye.

C₁-C₈alkyl is linear or branched alkyl, for example methyl, ethyl, propyl, butyl, pentyl, hexyl, heptyl, octyl or isopropyl.

C₁-C₈alkoxy is linear or branched, for example methoxy, propoxy or octyloxy.

Halogen is F, Cl, Br or I, preferably Cl.

C₁-C₈alkylene is, for example, linear or branched methylene, ethylene, propylene, butylene or pentylene.

The phthalocyanine complex compound of the formula (1), wherein the phthalocyanine backbone is substituted by at least one sulpho groups and to which the substituent of at least one mono-azo dye is attached by the linking group L, are characterized by rapid photo degradation, which has the effect that discolouration on the treated fabric is avoided, even after repeated treatment. The phthalocyanine complex compounds of the formula (1) are characterized by improved shading and exhaustion onto the fabrics. The phthalocyanine complex compounds of the formula (1) are also highly efficient photo catalysts by additional light absorption and energy transfer to the phthalocyanine part of the molecule.

According to a preferred embodiment the water-soluble phthalocyanine complex compound (1) corresponds to the formula 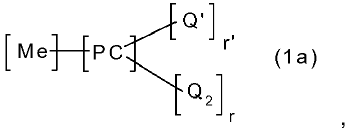 Wherein
PC represents the phthalocyanine structure;
Me represents the central metal atom or central metal group coordinated to PC, which is selected from the group consisting of Zn, Fe, Ca, Mg, Na, K, Al-Z₁, Si(IV)-(Z₁)₂, Ti(IV)-(Z₁)₂ and Sn(IV)-(Z₁)₂;
   Z₁ represents C₁-C₈alkanolate, OH⁻, R₀COO⁻, CIO₄⁻, BF₄⁻, PF₆⁻, R₀SO₃⁻, SO₄²⁻, NO₃⁻, F⁻, Cl⁻, Br⁻, I⁻, citrate, tartrate or oxalate, wherein R₀ is hydrogen or C₁-C₁₈alkyl;
   r represents 0 or a numeral from 1 to 3, preferably 1 to 2;
   r' represents a numeral from 1 to 3, preferably 1 to 3;
   each Q₂ independently of one another represents -SO₃⁻M⁺ or the group -(CH₂)ₘ-COO⁻M⁺; wherein M⁺ is H⁺, an alkali metal ion or the ammonium ion and m is 0 or a numeral from 1 to12;
   each Q' independently of one another represents the segment of the partial formula-L-D,
   Wherein
   D represents the substituent of a mono-azo dye; and
   L represents a group 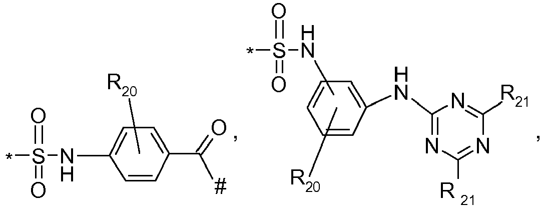 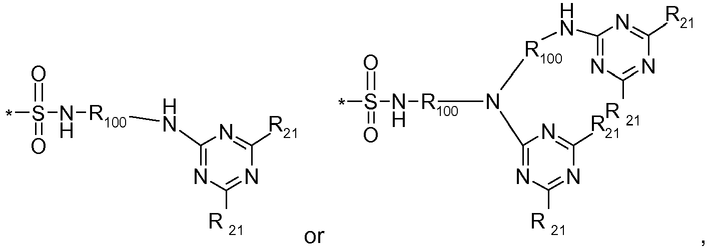
   Wherein
   R₂₀ represents hydrogen, C₁- C₈alkyl, C₁-C₈alkoxy or halogen;
   R₂₁ represents D, hydrogen, OH, Cl or F, provided that at least one is D;
   R₁₀₀ represents C₁-C₈alkylene;
   * marks the point of attachment of Me-PC; and
   # marks the point of attachment of the substituent D of the mono-azo dye.

In the phthalocyanine complex compound that corresponds to the formula (1 a) of above, the sum of r and r' is preferably from 1 - 4.

Me represents the central metal atom or central metal group coordinated to PC, which is selected from the group consisting of Zn, Al-Z₁ and Ti(IV)-(Z₁)₂, wherein Z₁ is as defined above, preferably halogen, e.g. chlorine, or hydroxy.

Me preferably represents Zn.

According to a preferred embodiment the water-soluble phthalocyanine complex compound (1) corresponds to the formula (2a) 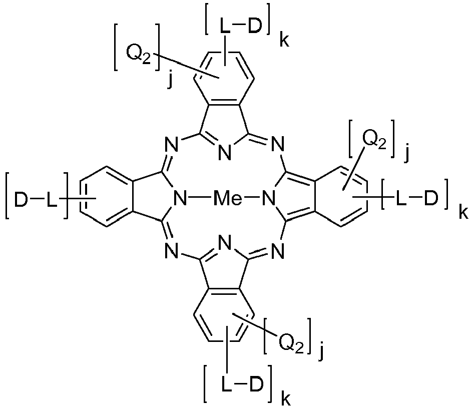 wherein
Me represents Zn, Al-Z₁, Si(IV)-(Z₁)₂ or Ti(IV)-(Z₁)₂, wherein Z₁ is chloride, fluoride, bromide or hydroxide;
each Q₂ independently of one another represents -SO₃⁻M⁺ or the group -(CH₂)ₘ-COO⁻M⁺, wherein M⁺ is H⁺, an alkali metal ion or the ammonium ion and m is 0 or a numeral from 1 to12;
each k is independently selected from 0 and 1, each j is independently selected from 0 and 1-k,
D represents the substituent of a mono-azo dye; and
L represents a group 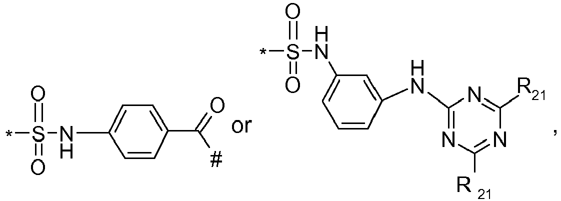 wherein
   R₂₁ represents D, hydrogen, OH, Cl or F, provided that at least one of R₂₁ is D, preferably two of R₂₁ are D;
   * marks the point of attachment of PC; and
   # marks the point of attachment to D.

For the 1-k in the definition of the number j, the number k shall refer to the substituent -[L-D]k which is attached to the same 6-membered aromatic ring as the respective substituent -[Q2]j.

According to a preferred embodiment, the groups D, independently of one another, represent the substituents of a mono- azo dye of the partial formulae Xa, Xb, Xc or Xd: 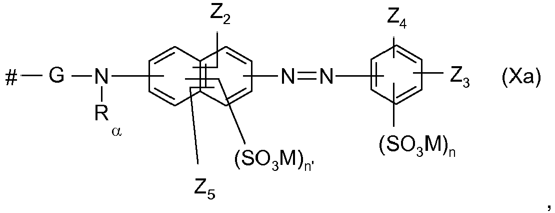 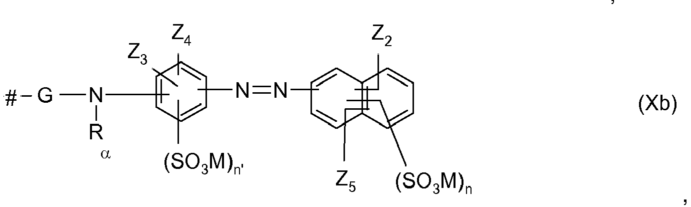 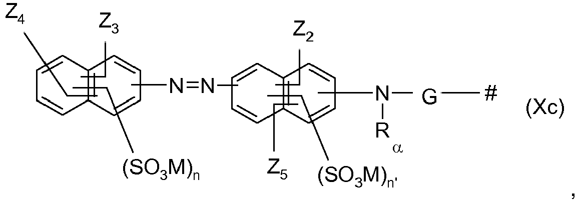 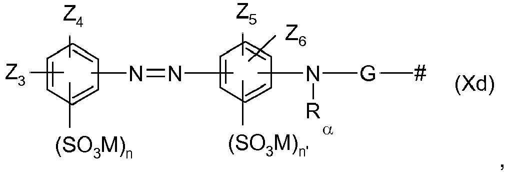 wherein
# marks the point of attachment of the bridging group L;
R_{α} represents hydrogen, C₁-C₄alkyl, C₁-C₂alkyl which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, straight chain or branched C₃-C₄-alkyl which is substituted by at least one substituent selected from the group consisting of hydroxy, cyano, SO₃H NH₂, carboxy, carbo-C₁-C₄alkoxy, C₁-C₄alkoxy, phenyl, naphthyl and pyridyl, aryl, aryl which is substituted by at least one substituent selected from the group consisting of hydroxy, cyano, SO₃H, NH₂, carboxy, carbo-C₁-C₄alkoxy, C₁-C₄alkoxy and C₁-C₄alkyl;
Z₂, Z₃, Z₄, Z₅ and Z₆
   independently of one another represent hydrogen, hydroxy, C₁-C₄alkyl, C₁-C₂alkyl which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, straight chain or branched C₃-C₄-alkyl which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, C₁-C₄alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, straight chain or branched C₃-C₄alkoxy which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, halogen, -SO₂CH₂CH₂SO₃H, NO₂, COOH, -COOC₁-C₄alkyl, NH₂, NHC₁-C₄alkyl, wherein the alkyl group may be substituted by at least one substituent selected from the group consisting of OH, NH₂, C₁-C₄alkyl, CN and COOH, N(C₁-C₄alkyl)C₁-C₄alkyl, wherein the alkyl groups may independently of one another be substituted by at least one substituent selected from the group consisting of OH, NH₂, C₁-C₄alkyl, CN and COOH, NH-aryl, NH-aryl, wherein aryl is substituted by at least one substituent selected from the group consisting of hydroxy, cyano, SO₃H, NH₂, carboxy, carbo-C₁-C₄alkoxy, C₁-C₄alkyl and C₁-C₄alkoxy, or represents NHCOC₁-C₄alkyl or NHCOOC₁-C₄alkyl;
G represents the direct bond, -COOC₁-C₄alkylene, arylene; arylene which is substituted by at least one substituent selected from the group consisting of hydroxy, cyano, NO₂, SO₃H, NH₂, carboxy, carbo-C₁-C₄alkoxy, C₁-C₄alkoxy and C₁-C₄alkyl, C₁-C₄alkylene, C₁-C₄-alkylene substituted by at least one substituent selected from the group consisting of hydroxy, cyano, NO₂, SO₃H, NH₂, carboxy, carbo-C₁-C₄alkoxy, C₁-C₄alkoxy and C₁-C₄alkyl, or represents -CO-arylene;
n represents 0; 1; 2 or 3;
n' represents 0; 1 or 2; and
each M independently of one another represents hydrogen; an alkali metal ion or an ammonium ion.

The substituents in the naphthyl groups, in the event they are not attached in a fixed position to an individual carbon atom, can be attached in either ring of the naphthyl radical. This is expressed by the horizontal line going through both rings in, for example, in structural formula Xa, Xb and Xc.

For example C₁-C₄alkylene is methylene, ethylene, propylene or butylene.

Arylene in the context of the description of the instant invention means phenylene or naphthylene, preferably phenylene.

According to a preferred embodiment, the groups D, independently of one another, represent the substituents of a mono- azo dye of the partial formulae Xla, Xlb, Xlc or Xld: 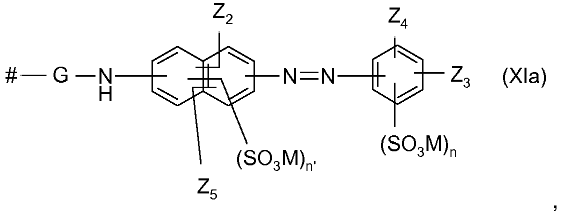 Wherein
# marks the point of attachment of the bridging group L;
Z₂ represents C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₂alkoxy, C₁-C₂alkyl, phenyl, naphthyl and pyridyl, or represents OH;
Z₃ represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₂alkoxy, C₁-C₂alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN and COOH, or represents NHCOC₁-C₂alkyl or NHCOOC₁-C₂alkyl;
Z₄ represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN and COOH, or represents NHCOC₁-C₂alkyl or NHCOOC₁-C₂alkyl;
Z₅ represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl;
G represents the direct bond, COOC₁-C₂alkylene, arylene, arylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl, C₁-C₂alkylene or C₁-C₂-alkylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl;
n represents 0, 1, 2 or 3;
n' represents 0, 1 or 2; and
each M independently of one another represents hydrogen, Na⁺ or K⁺; 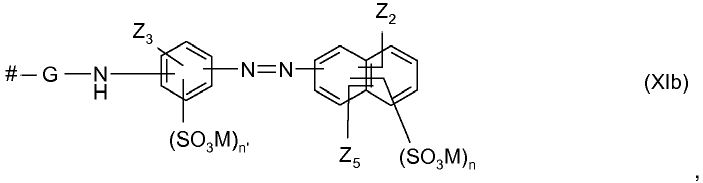 Wherein
   # marks the point of attachment of the bridging group L;
   Z₂represents C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₂alkoxy, C₁-C₂alkyl, phenyl, naphthyl and pyridyl or represents OH;
Z₃ is hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₂alkoxy, C₁-C₂alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN or COOH or represents NHCOC₁-C₂alkyl or NHCOOC₁-C₂alkyl;
Z₅ represents hydrogen, C₁-C₂-alkyl or C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl;
G represents the direct bond, COOC₁-C₂alkylene, arylene, arylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl, C₁-C₂alkylene or C₁-C₂-alkylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl;
n represents 0, 1, 2 or 3;
n' is 0, 1 or 2; and
each M independently of one another represents hydrogen, Na⁺ or K⁺; 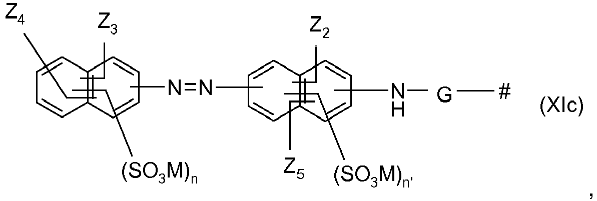 Wherein
# marks the point of attachment of the bridging group L;
Z₂represents hydrogen, hydroxy, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy or C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, or represents NO₂;
Z₃represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₂alkoxy, C₁-C₂alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN and COOH, or represents NHCOC₁-C₂alkyl or NHCOOC₁-C₂alkyl;
Z₄represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy or C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN and COOH, or represents NHCOC₁-C₂alkyl or NHCOOC₁-C₂alkyl;
Z₅represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy, which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, or represents NO₂;
G represents the direct bond, COOC₁-C₂alkylene, arylene, arylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl, C₁-C₂alkylene or C₁-C₂-alkylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl;
n represents 0, 1, 2 or 3;
n' represents 0, 1 or 2; and
each M independently of one another represents Na⁺ or K⁺; 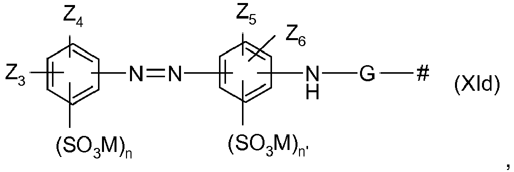 wherein
# marks the point of attachment of the bridging group L;
Z₃ represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, or represents SO₂CH₂CH₂SO₃H or NO₂;
Z₄ represents C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, OH, or represents SO₂CH₂CH₂SO₃H, or NO₂;
Z₅ represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN and COOH, or represents NHCOC₁-C₂alkyl or NHCOOC₁-C₂alkyl;
Z₆ represents C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, or represents NO₂;
G represents the direct bond, COOC₁-C₂alkylene, arylene, arylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl, C₁-C₂alkylene or C₁-C₂-alkylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl;
n represents 0, 1, 2 or 3;
n' represents 0, 1 or 2; and
each M independently of one another represents hydrogen, Na⁺ or K⁺.

According to a particularly preferred embodiment, D is selected from the group consisting of compounds, wherein the partial formulae 10, 11, 12, 13 and 14: 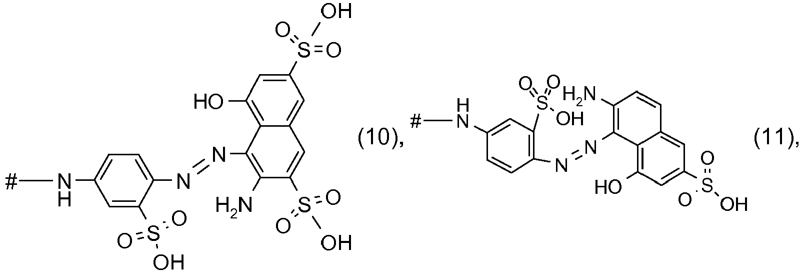 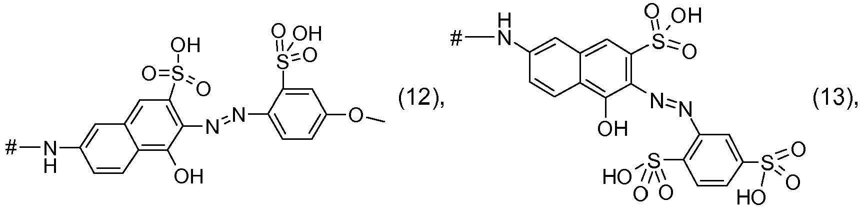 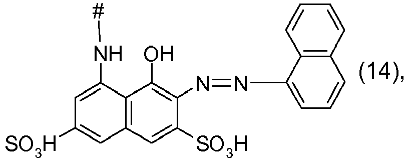 are present and wherein # marks the point of attachment of the bridging group L.

The sulphonic acid groups of the dyes represented by -SO₃H may also be in the form of their salts, in particular of alkali metal salts, such as Na, K or Li salts or as ammonium salts. Also mixtures of the free acid and the corresponding salts are embraced.

A particularly suitable individual phthalocyanine is represented by the following formula wherein the degree of sulphonation is between 1 and 3 in the phthalocyanine ring:

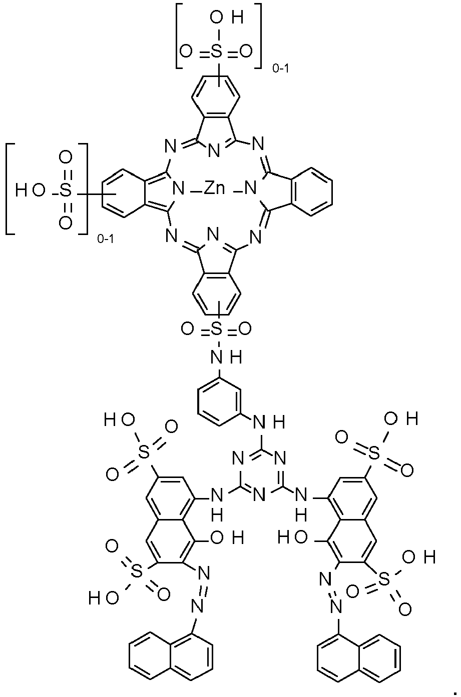

According to another preferred embodiment, the water-soluble phthalocyanine complex compound (1) corresponds to the formula 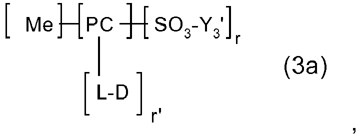 wherein
PC, L and D are as defined above (including the preferences);
Me is Zn or Al-Z₁, Z₁ is chlorine, fluorine, bromine or hydroxy;
Y₃' is hydrogen; an alkali metal ion or ammonium ion;
r is zero or a numeral from 1-3; and
r' is a numeral from 1 to 4.

The amount of water-soluble phthalocyanine complex compounds (1) present in the particles may vary within wide limits. A preferred range is 0.01-20.0 wt.-%, particularly 0.1-20 wt.-%, especially 1 -15.0 wt.-%, based on the total weight of the particles. Highly preferred is a range of 2 -15.0 wt.-%, especially 2 -10 wt.-%.

For the synthesis of the water-soluble phthalocyanine complex compounds (1), two different reaction sequences are available: either by initial synthesis of a metal-free phthalocyanine derivative and subsequent complexation with a metal salt or by synthesis of a phthalocyanine ring system from a simple benzenoid precursor by concomitant incorporation of the metal ion.

Substituents can be introduced before or after the formation of the phthalocyanine ring structure.

A suitable method to obtain water-soluble phthalocyanine complex compounds (1) is the introduction of sulphonate groups, for example by sulphonation of the unsubstituted metal phthalocyanine with 1-4 sulpho groups:

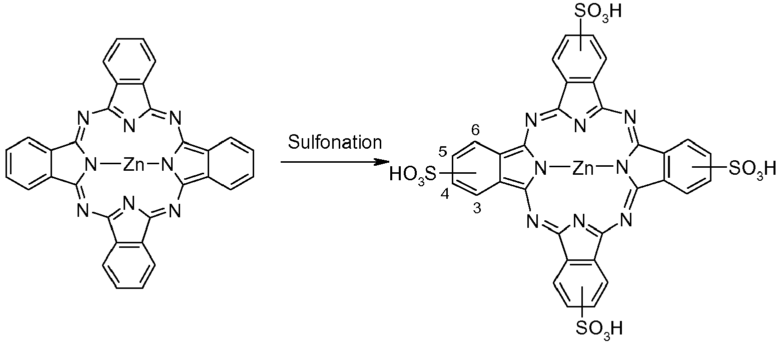

The sulphonated phthalocyanine complex compounds are mixtures of different structure and different positional isomers. The -SO₃H-group can be located at positions 3, 4, 5 or 6. Also the degree of sulphonation is varying. For example, a tetra sodium salt of the zinc phthalocyanine can be prepared according to known procedure: J. Griffiths et al., Dyes and Pigments, Vol. 33, 65-78 (1997*)* and the literature cited therein.

Another method to obtain a sulphonated metal phthalocyanine is reacting a sulpho phthalic acid with a metal salt, urea and a molybdate catalyst in a melt condensation. The position of the sulphonation is determined by the corresponding phthalic acid reactant. If 4-sulphophthalic acid is used, a tetrasulphonated metal phthalocyanine with sulphonic acid groups exclusively in position 4 or 5 is obtained.

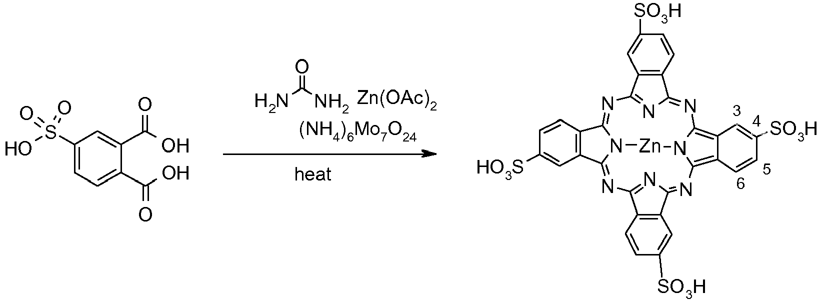

The content of sulphonic acid groups can be adjusted by addition of phthalic acid. With this melt process sulphonated zinc phthalocyanine derivatives having a degree of sulphonation between DS= 1 - 4 can be prepared.

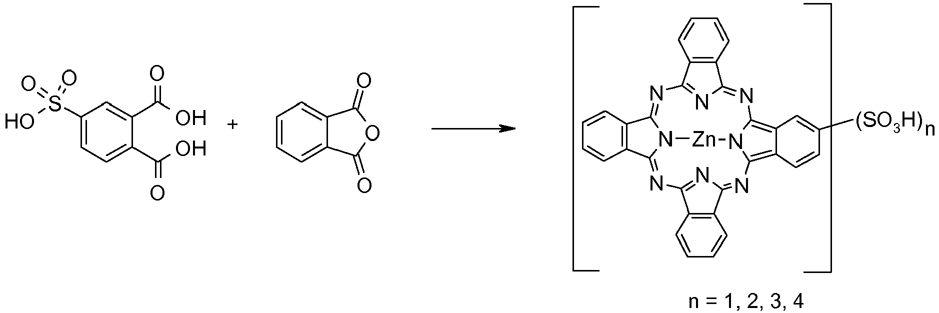

In the particles according to the present application, the phthalocyanine complex is being linked with a mono-azo dye molecule corresponding to D via specific linking groups L. A convenient way to realize this linkage is the synthesis of a metal phthalocyanine sulphonyl chloride by a sulphochlorination reaction after known procedures (DE 2812261*,* DE 0153278). By varying the amount of the sulphochlorination agent, the desired degree of sulpho chloride content can be adjusted. The sulphochlorination reaction of phthalocyanines generally leads to a main product, but as by-products small amounts of lower or higher degree of sulphonyl chloride groups are detected.

The resulting reactive phthalocyanine-sulphonyl chloride can then be reacted further with a suitable dye having an amino group. To illustrate the synthesis, the following synthetic examples leading to zinc and aluminium phthalocyanines linked with amino-functionalized azo dyes are given. The syntheses are performed as shown in the following scheme. From the possible positional isomers, only one is shown. The formation of the side products (degree of -SO₃R and SO₂Cl) is not shown. 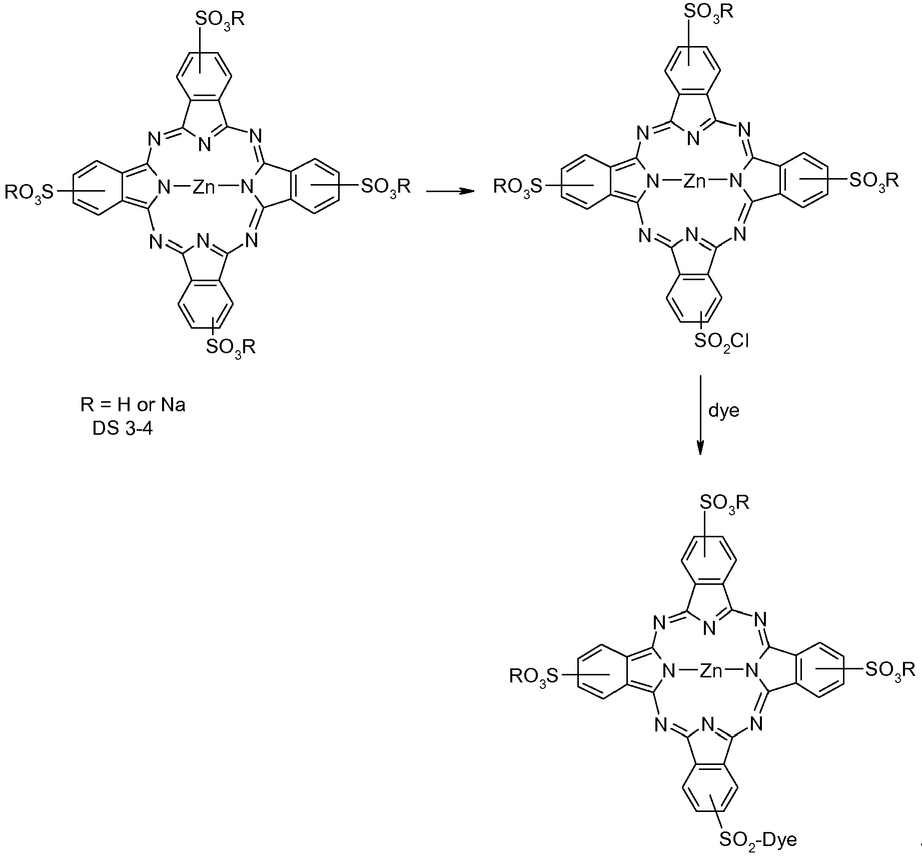 The synthesis of zinc phthalocyanine complex compounds with a lower degree of sulphonation and analogous activation and coupling to the corresponding zinc phthalocyanine azo dyes is also possible.

The synthesis of exactly tris-sulphonated zinc phthalocyanine derivatives is known from literature [J.E. van Lier, Journ. Med. Chem. (1997), 40 (24) 3897] as a product from ring expansion reaction of boron tri(4-sulpho)sub-phthalocyanine.

The synthesis of metal phthalocyanines with lower degree of sulphonation can also be performed by a modified sulphonation reaction, for example by shortening of reaction time and/or reduction of reaction temperature (WO 2009068513 and WO 2009069077).

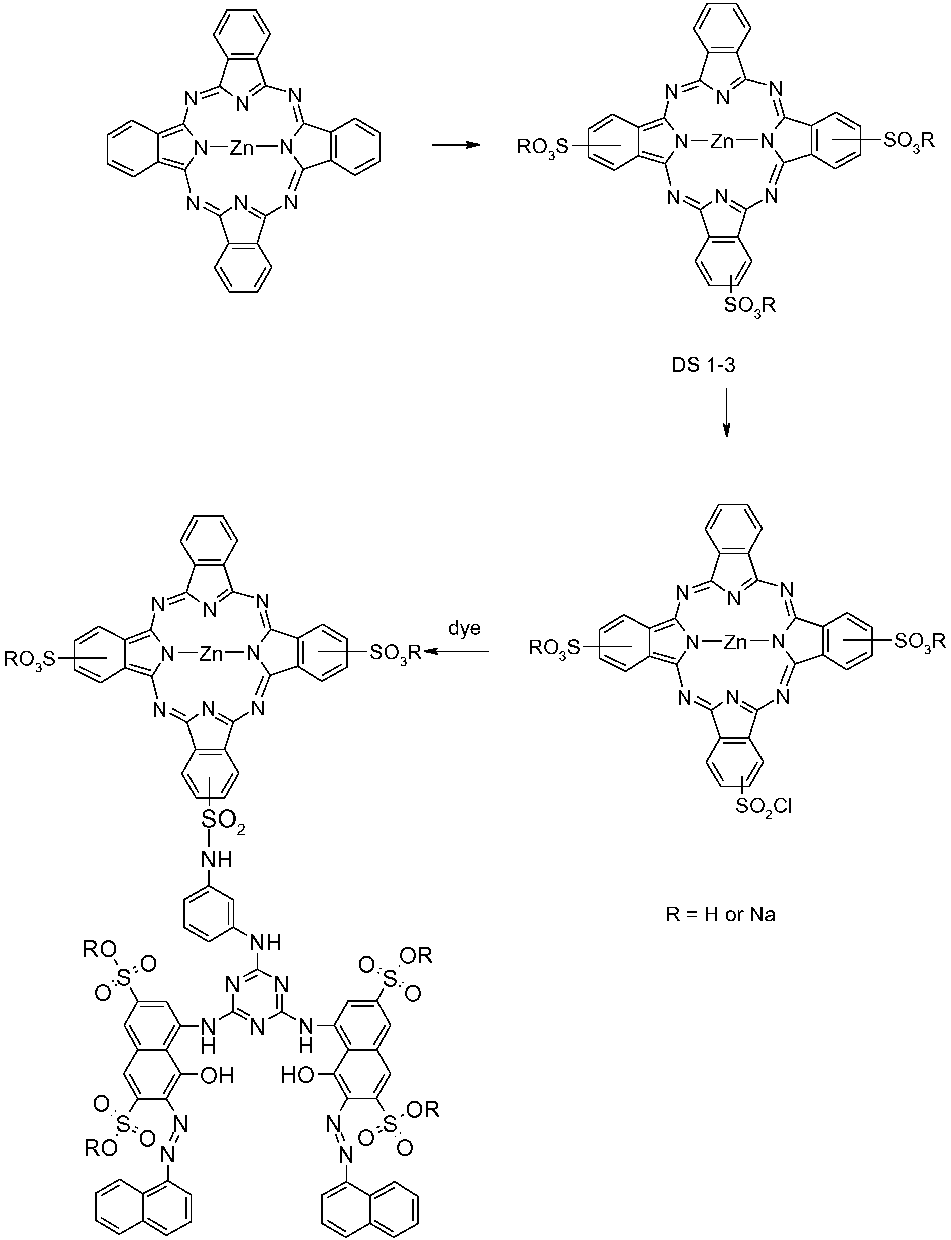

As component b) all kinds of gelatine may be used. Examples are gelatines of the gelling type and gelatine hydrolysates. Gelatines of the gelling type show, when immersed in water, hydration, whereas for Gelatine hydrolysates no gelation is observed (see Ullmann's Encyclopedia of Industrial Chemistry, 2012, Vol. 16, pages 579-593). In order to obtain a desired bloom strength, gelatines of different bloom values may be used. Variation of the weight ratio results in the desired bloom value. For example, gelatine of bloom strength 0 and gelatine of bloom strength 100 can be used in different weight ratios to adjust the bloom strength; the resulting bloom strength is in general proportional to the amount of gelatine having a bloom strength of 100.

Bloom strength, also referred to as gel strength, is determined with a Bloom gelometer (S. Williams (ed.): Official Methods of Analysis of the Association of Official Analytical Chemists, 14th ed., 23, AOAC, Inc., Arlington, Virginia 1984, p. 429 ; or US 1540979). The Bloom strength is determined as follows: 6.67 % solution of the gelatine sample is prepared in a special wide-mouthed test bottle, which is then cooled to 10.0 ± 0.1 °C and kept for 17 ± 1 h for maturation at this temperature. The firmness of the resulting gel is then measured with a gelometer. This instrument impresses a standard plunger (12.7 mm diameter, plane surface, sharp edges) into the surface of the gel. The force required to depress the plunger 4 mm into the gel is the gel strength or Bloom value of the gelatin.

Preferred as gelatine component b) are those having a Bloom strength of 2 to 50, especially 3 to 50 and more preferably 4 to 50. Highly preferred are those having a bloom strength of 6 to 50, especially 8 to 50. As upper limit a value of 40, especially 30, is preferred.

The amount of the gelatine component b) is preferably 3-60% by weight, more preferably 5-50% by weight and especially preferably 10-40% by weight, based on the total weight of the particles. Highly preferred is an amount of 15-35% by weight.

In a preferred embodiment of the present invention the particles may comprise in addition sugar, like saccharose or glucose, for example as glucose syrup. The amount of the optional sugar component, if present, is preferably 0.01-60% by weight, more preferably 1-50% by weight and especially preferably 1-40% by weight, based on the total weight of the particles. Highly preferred is an amount of 5-40% by weight.

The optional oil component c) is preferably a triglyceride oil, or a modified triglyceride oil. These include vegetable oils such as jojoba, soybean, canola, sunflower, safflower, rice bran, avocado, almond, olive, sesame, persic, castor, coconut, and mink oils, as well as raffinates thereof. Synthetic triglycerides may also be employed. Modified triglycerides include materials such as ethoxylated and maleated triglyceride derivatives. Preferred are vegetable oils, especially coconut oil. Further preference is given to medium chain triglycerides.

The amount of the oil component c), if present, is preferably 0.01-10% by weight, more preferably 0.1-10% by weight and especially preferably 0.1-5% by weight, based on the total weight of the particles. Highly preferred is an amount of 0.1-2.5% by weight.

As optional powdering agent component d) any conventiontional powdering agent may be used, such as a starch, e.g. corn starch, a modified starch, tri-calcium phosphate, lactose, mannitol, ethylcellulose, coagulated albumin, hardened gelatine, casein, stearate-Ca, stearate-Na, a metal soap, hydrogenated ricinus oil, polyoxide, talcum, a wax, silica or a silicate. Preference is given to starch and modified starch. The powdering agent can be used in order to separate the particles during drying, to prevent agglomeration of the particles. The use of a powdering agent is preferred.

The amount of the optional powdering agent component d), if present, is preferably 1-90% by weight, more preferably 5-90% by weight and especially preferably 10-90% by weight, based on the total weight of the particles. Highly preferred is an amount of 10-50% by weight.

The optional additives components e) may be anionic dispersing agents; inorganic salts, aluminium silicates such as zeolites, and also compounds such as talc, kaolin; disintegrants such as, for example, powdered or fibrous cellulose, microcrystalline cellulose; fillers such as, for example, dextrin, starch as for example corn starch or potato starch; water-insoluble or water-soluble dyes or pigments; and also optical brighteners. TiO₂, SiO₂ or magnesium trisilicate may also be used in small amounts, for example 0.0 to 10.0% by weight, based on the weight of the particles.

The anionic dispersing agents used are, for example, the commercially available water-soluble anionic dispersing agents for dyes, pigments etc.

The following products are listed as examples: condensation products of aromatic sulphonic acids and formaldehyde, condensation products of aromatic sulphonic acids with unsubstituted or chlorinated biphenyls or biphenyl oxides and optionally formaldehyde, (mono-/di-)alkylnaphthalenesulphonates, sodium salts of polymerized organic sulphonic acids, sodium salts of polymerized alkylnaphthalenesulphonic acids, sodium salts of polymerized alkylbenzenesulphonic acids, alkylarylsulphonates, sodium salts of alkyl polyglycol ether sulphates, polyalkylated polynuclear arylsulphonates, methylene-linked condensation products of arylsulphonic acids and hydroxyarylsulphonic acids, sodium salts of dialkylsulphosuccinic acids, sodium salts of alkyl diglycol ether sulphates, sodium salts of polynaphthalenemethanesulphonates, ligno- or oxyligno-sulphonates or heterocyclic polysulphonic acids.

Especially suitable anionic dispersing agents are condensation products of naphthalenesulphonic acids with formaldehyde, sodium salts of polymerized organic sulphonic acids, (mono-/di-)alkylnaphthalenesulphonates, polyalkylated polynuclear arylsulphonates, sodium salts of polymerized alkylbenzenesulphonic acid, lignosulphonates, oxylignosulphonates and condensation products of naphthalenesulphonic acid with a polychloromethylbiphenyl.

The amount of the optional additives component e), if present, is preferably 0.01-90% by weight, more preferably 1-90% by weight and especially preferably 1-60% by weight, based on the total weight of the particles. Highly preferred is an amount of 1-50% by weight.

The particles according to the present invention may contain residual moisture as component f). This water level may range from 0.1-15% by weight, more preferably 1-10% by weight, based on the total weight of the particles.

According to a preferred embodiment, the particles have an average particle size of < 1000 µm, especially < 500 µm.

According to a particularly preferred embodiment, the particles have an average particle size of 50 to 400 µm.

A preferred embodiment of the present invention relates to particles comprising
a) 0.1 - 20 wt.-% of at least one water-soluble phthalocyanine compound;
b) 5 - 60 wt.-% of gelatine having a bloom strength of 2 to 80;
c) 0 - 10 wt.-% of an oil,
d) 0 - 90 wt.-% of a powdering agent,
e) 0 - 90 wt.-% of further additives suitable for the preparation of solid agglomerates, and
f) 0 - 15 wt.-% of water,
provided that the sum of components a), b), c), d), e) and f) amounts up to 100 wt.-%.

A particulary preferred embodiment of the present invention relates to particles comprising
a) 1 - 15 wt.-% of at least one water-soluble phthalocyanine compound;
b) 5 - 50 wt.-% of gelatine having a bloom strength of 2 to 80;
c) 0.1 - 5 wt.-% of an oil,
d) 1 - 90 wt.-% of a powdering agent,
e) 0 - 90 wt.-% of further additives suitable for the preparation of solid agglomerates, and
f) 0.1 - 15 wt.-% of water,
provided that the sum of components a), b), c), d), e) and f) amounts up to 100 wt.-%.

As to each of the components a), b), c), d), e) and f) of the above particles the preferences given before apply.

The present invention also relates to a process for the preparation of the particles described above, which comprises
i) dissolving at least one water-soluble phthalocyanine compound in an aqueous medi-um,
ii) dissolving gelatine having a bloom strength of 2 to 80 in the resulting solution, or adding an aqueous solution of said gelatine,
iii) converting the mixture thus obtained into droplets, and
iv) reducing the moisture content of the resulting particles.

The particles according to the present invention are prepared according to known methods.

In general, a mixture comprising all required components for the preparation of the particles (except for powdering agent component d)), is subjected to spray-drying. Spray-drying may be carried out at a temperature of 40 to 140°C. According to one embodiment spray-drying is carried out at temperatures of 40 to 100°C, especially 60 to 100°C. According to a further embodiment of the present invention spray-drying is carried out at temperatures of 100 to 140°C, especially 100 to 130°C. During spray-drying, the particles may be covered by powdering agents according to know methods. Usually, after spray-drying, the particles are dried at temperatures ranging from 20-60°C, especially at 40°C. The resulting powder may then be sieved to get the desired particle size. In a preferred method spray-drying is performed while introducing the powdering agent component d) into the spray-drying zone.

The present invention also relates to compositions comprising the particles referred to above.

Such compositions may be liquid, solid, paste-like or gel-like. The compositions, especially washing agent compositions but also washing agent additives or additive concentrates, for example pre- and/or after-treatment agents, stain-rem¬oving salt, washing-power enhancers, fabric conditioners, bleaching agents, UV-pro¬tection enhancers etc., may be in any known and customary form, especially in the form of powders, (super) compact powders, in the form of single- or multi-layer tablets (tabs), bars, blocks, sheets or pastes, or in the form of pastes, gels or liquids used in capsules or in pouches (sachets). Powders may also be used in suitable sachets or pouches.

The present invention also relates to a washing agent composition, comprising
A) particles as defined hereinbefore; and
B) further additives suitable for the preparation of washing agents.

Preferred are washing agent compositions, comprising
A) 0.001 to 1.0 wt.-% of particles as defined hereinbefore; and
B) 99.0 to 99.999 wt.-% further additives suitable for the preparation of washing agents.

Preferred washing agent compositions comprise

| | |
|---|---|
| I) 5.0 to 70.0 wt.-% A) | of at least one surfactant selected from the group of anionic surfactants, based on the total weight of the washing agent formulation; |
| II) 0.0 to 60.0 wt.-% B) | of at least one builder substance, based on the total weight of the washing agent formulation; |
| III) 0.0 to 30.0 wt.-% C) | of at least one peroxide and, optionally, at least one activator and/or at least one catalyst, based on the total weight of the washing agent formulation; |
| IV) 0.001 to 5.0 wt.-% D) | of particles as defined above, based on the total weight of the washing agent formulation; |
| V) 0.0 to 60.0 wt.-% E) | of at least one further additive, based on the total weight of the washing agent formulation; and |
| VI) 0.0 to 5.0 wt.-% F) | water, based on the total weight of the washing agent formulation; |

Provided that the sum of the weight percentages of components I) - VI) in the formulation is 100%.

The anionic surfactant A) can be, for example, a sulphate, sulphonate or carboxylate surfactant or a mixture thereof. Preferred sulphates are those having from 12 to 22 carbon atoms in the alkyl radical, optionally in combination with alkyl ethoxysulphates in which the alkyl radical has from 10 to 20 carbon atoms.

Preferred sulphonates are e.g. alkylbenzene sulphonates having from 9 to 15 carbon atoms in the alkyl radical. The cation in the case of anionic surfactants is preferably an alkali metal cation, especially sodium.

The anionic surfactant component may be, e.g., an alkylbenzene sulphonate, an alkylsulphate, an alkylether sulphate, an olefin sulphonate, an alkane sulphonate, a fatty acid salt, an alkyl or alkenyl ether carboxylate or an sulpho fatty acid salt or an ester thereof. Preferred are alkylbenzene sulphonates having 10 to 20 carbon atoms in the alkyl group, alkyl sulphates having 8 to 18 carbon atoms, alkylether sulphates having 8 to 22 carbon atoms, and fatty acid salts being derived from palm oil or tallow and having 8 to 22 carbon atoms. The average molar number of ethylene oxide added in the alkylether sulphate is preferably 1 to 22, preferably 1 to 10. The salts are preferably derived from an alkaline metal like sodium and potassium, especially sodium. Highly preferred carboxylates are alkali metal sarcosinates of the formula

R₁₀₉-CO(R₁₁₀)CH₂COOM₁,

in which R₁₀₉ is alkyl or alkenyl having 8-20 carbon atoms in the alkyl or alkenyl radical, R₁₁₀ is C₁-C₄ alkyl and M₁ is an alkali metal, especially sodium.

The total amount of anionic surfactant is preferably 5.0-50.0 wt.-%, preferably 5.0-40.0 wt.-% and more preferably 5.0-30.0 wt.-%. As to these surfactants it is preferred that the lower limit is 10.0 wt.-%.

Suitable builder substances B) are, for example, alkali metal phosphates, especially tripolyphosphates, carbonates or hydrogen carbonates, especially their sodium salts, silicates, aluminosilicates, polycarboxylates, polycarboxylic acids, organic phosphonates, aminoalkylene-poly(alkylenephosphonates) or mixtures of those compounds.

Especially suitable silicates are sodium salts of crystalline layered silicates of the formula Na-HSiₜO₂ₜ₊₁.pH₂O or Na₂SiₜO₂ₜ₊₁.pH₂O wherein t is a number from 1.9 to 4 and p is a number from 0 to 20.

Among the aluminosilicates, preference is given to those commercially available under the names ZEOLITH A, B, X and HS, and also to mixtures comprising two or more of those components. ZEOLITH A is preferred.

Among the polycarboxylates, preference is given to polyhydroxycarboxylates, especially citrates, and acrylates and also copolymers thereof with maleic anhydride. Preferred polycarboxylic acids are nitrilotriacetic acid, ethylenediaminetetraacetic acid and ethylenediamine disuccinate either in racemic form or in the form of pure enantiomers (S,S).

Phosphonates or aminoalkylenepoly(alkylenephosphonates) that are especially suitable are alkali metal salts of 1-hydroxyethane-1,1-diphosphonic acid, nitrilotris(methylenephosphonic acid), ethylenediaminetetramethylenephosphonic acid, hexamethylenediamin N,N,N',N' tetrakis methanephosphonic acid and diethylenetriaminepentamethylenephosphonic acid, as well as the salts thereof. Also preferred polyphosphonates have the following formula 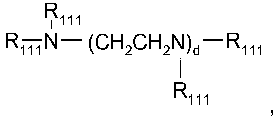 Wherein
R₁₁₁ is CH₂PO₃H₂ or a water soluble salt thereof and
d is an integer of the value 0, 1, 2 or 3
are preferred.

Especially preferred are the polyphosphonates wherein b is an integer of the value of 1.

Suitable peroxide components C) include, for example, the organic and inorganic peroxides (like sodium percarbonate or sodium perborate) known in the literature and available commercially that bleach textile materials at conventional washing temperatures, for example from 5 to 95°C.

The amount of the peroxide or the peroxide-forming substance is preferably 0.5-30.0% by weight, more preferably 1.0-20.0% by weight and especially preferably 1.0-15.0% by weight. Suitable peroxides of component C) are compounds capable of yielding hydrogen peroxide in aqueous solutions, for example, the organic and inorganic peroxides known in the literature and available commercially that bleach textile materials at conventional washing temperatures, for example from 5 to 95°C.

The organic peroxides are, for example, mono- or poly-peroxides, urea peroxides, a combination of a C₁-C₄alkanol oxidase and C₁-C₄alkanol (Such as methanol oxidase and ethanol as described *in* WO 95/07972)*,* alkylhydroxy peroxides, such as cumene hydroperoxide and t-butyl hydroperoxide, organic mono peracids of formula 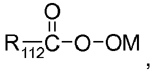 Wherein
M signifies hydrogen or a cation,
R₁₁₂ signifies unsubstituted C₁-C₁₈alkyl; substituted C₁-C₁₈alkyl; unsubstituted aryl; substituted aryl; -(C₁-C₆alkylene)-aryl, wherein the alkylene and/or the alkyl group may be substituted; and phthalimidoC₁-C₈alkylene, wherein the phthalimido and/or the alkylene group may be substituted. Preferred mono organic peroxy acids and their salts are those of the formula; 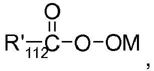
Wherein
M signifies hydrogen or an alkali metal, and
R'₁₁₂ signifies unsubstituted C₁-C₄alkyl; phenyl;-C₁-C₂alkylene-phenyl or phthalimidoC₁-C₈alkylene.

Especially preferred is CH₃COOOH and its alkali salts.

Especially preferred is also epsilon-phthalimido peroxy hexanoic acid and its alkali salts.

Rather than using peroxy acid itself, one may also use organic peroxy acid precursors and H₂O₂. Such precursors are the corresponding carboxy acid or the corresponding carboxy anhydride or the corresponding carbonyl chloride, or amides, or esters, which can form the peroxy acids on perhydrolysis. Such reactions are commonly known.

Peroxy acids may also be generated from precursors, such as bleach activators, that is to say compounds that, under perhydrolysis conditions, yield unsubstituted or substituted perbenzo-and/or peroxo-carboxylic acids having from 1 to 10 carbon atoms, especially from 2 to 4 carbon atoms. Tetraacetyl ethylenediamine (TAED) is used as the activator in laundry compositions commonly used in Europe. Laundry compositions commonly used in the U.S., on the other hand, are frequently based on sodium nonanoylbenzosulfonate (Na-NOBS). Activator systems are effective in general, but the bleaching action of currently customary activators is inadequate under certain but desirable washing conditions (e.g. low temperature, short wash cycle). These and other activators not directly leading to peroxy acids are described in WO0116273 and WO03104199*.*

The composition may contain one or more optical brighteners, for example from the groups bis-triazinylamino-stilbenedisulphonic acid, bis-triazolyl-stilbenedisulphonic acid, bis-styrylbiphenyl or bis-benzofuranylbiphenyl, bis-benzoxalyl derivatives, bis-benzimidazolyl derivatives or coumarin derivatives or pyrazoline derivatives.

The optical brighteners may be selected from a wide range of groups, such as 4,4'-bis-(triazinylamino)-stilbene-2,2'-disulphonic acids, 4,4'-bis-(triazol-2-yl)stilbene-2,2'-disulphonic acids, 4,4'-(diphenyl)-stilbenes, 4,4'-distyryl-biphenyls, 4-phenyl-4'-benzoxazolyl-stilbenes, stilbenyl-naphthotriazoles, 4-styryl-stilbenes, bis-(benzoxazol-2-yl) derivatives, bis-(benzimidazol-2-yl) derivatives, coumarines, pyrazolines, naphthalimides, triazinyl-pyrenes, 2-styrylbenzoxazole- or -naphthoxazole derivatives, benzimidazole-benzofuran derivatives or oxanilide derivatives. These optical brighteners are known and commercially available (for example Tinopal^{®} CBS-X, Tinopal^{®} DMA-X, Tinopal^{®} 5BM-GX from BASF). They are described inter alia in WO 2006/024612.

The composition may contain one or more auxiliaries, such as soil suspending agents, for example sodium carboxymethylcellulose; salts for adjusting the pH, for example alkali or alkaline earth metal silicates; foam regulators, for example soap; salts for adjusting the spray drying and granulating properties, for example sodium sulphate; perfumes; and also, if appropriate, antistatic and softening agents; such as smectite clays; photo bleaching agents; pigments; and/or shading agents. These constituents preferably should, of course, be stable to any bleaching system employed. Such auxiliaries can be present in an amount of, for example, 0.1 to 20.0 wt.-%, preferably 0.5 to 10.0 wt.-%, especially 0.5 to 5.0 wt.-%, based on the total weight of the detergent.

Furthermore, the composition can optionally contain enzymes. Enzymes can be added to detergents for stain removal. The enzymes usually improve the performance on stains that are either protein- or starch-based, such as those caused by blood, milk, grease or fruit juices. Preferred enzymes are cellulases, proteases, amylases and lipases. Preferred enzymes are cellulases and proteases, especially proteases. Cellulases are enzymes which act on cellulose and its derivatives and hydrolyse them into glucose, cellobiose, cellooligosaccharide. Cellulases remove dirt and have the effect of mitigating the roughness to the touch. Examples of enzymes to be used include, but are by no means limited to, the following:
Commercially available detergent proteases, such as Alcalase^{®}, Esperase^{®}, Everlase^{®}, Savinase^{®}, Kannase^{®} and Durazym^{®};
Commercially available detergent amylases, such as Termamyl^{®}, Duramyl^{®}, Stainzyme^{®}, Natalase^{®}, Ban^{®} and Fungamyl^{®};
Commercially available detergent cellulases, such as Celluzyme^{®}, Carezyme^{®} and Endolase^{®};
Commercially available detergent lipases, such as Lipolase^{®}, Lipolase Ultra^{®} and Lipoprime^{®};
Suitable mannanases, such as Mannanaway^{®};
These enzymes are commercially available from NOVOZYMES A/S.

The enzymes can optionally be present in the detergent. When used, the enzymes are usually present in an amount of 0.01-5.0 wt.-%, preferably 0.05-5.0 wt.-% and more preferably 0.1-4.0 wt.-%, based on the total weight of the detergent.

Further preferred additives to the agents according to the invention are dye fixing agents and/or polymers which, during the washing of textiles, prevent staining caused by dyes in the washing liquor that have been released from the textiles under the washing conditions. Such polymers are preferably polyvinylpyrrolidones, polyvinylimidazole or polyvinylpyridine-N-oxides which may have been modified by the incorporation of anionic or cationic substituents, especially those having a molecular weight in the range of from 5000 to 60 000, more especially from 5000 to 50 000. Such polymers are usually used in an amount of from 0.01 to 5.0 wt.-%, preferably 0.05 to 5.0 wt.-%, especially 0.1 to 2.0 wt.-%, based on the total weight of the detergent. Preferred polymers are those given in WO 02/02865, see especially page 1, last paragraph and page 2, first paragraph.

The washing agent composition according to the invention can be prepared in a generally known manner.

A composition in powder form can be prepared, for example, by first preparing an initial powder by spray-drying an aqueous slurry comprising all of the aforementioned components except for components C) and D) and then adding the dry components C) and D) and mixing all of them together. It is also possible to start from an aqueous slurry which, although comprising components A) and B), does not comprise all of component A). The slurry is spray-dried; component D) is then mixed with component B) and added; and then component C) is mixed in dry. The components are preferably mixed with one another in such amounts that a solid compact washing agent composition in granule form is obtained, having a specific weight of at least 500 g/l.

According to a specific embodiment of the process, the production of the washing agent composition is carried out in three steps. In the first step a mixture of anionic surfactant and builder substance is prepared. In the second step peroxide and, where appropriate, the particles according to the invention, are added. That method is usually carried out in a fluidised bed. In a further preferred embodiment, the individual steps are not carried out completely separately, so that there is a certain amount of overlap between them. Such a method is usually carried out in an extruder, in order to obtain granules in the form of "megapearls".

As an alternative thereto, the particles according to the invention can, for the purpose of admixture with a washing agent in a post-dosing step, be mixed with other washing agent components such as phosphates, zeolites, brighteners or enzymes.

A mixture of that kind for post-dosing of the particles is distinguished by a homogeneous distribution of the particles according to the invention in the mixture and can consist of, for example, from 5 to 50% particles and from 95 to 50% sodium tripolyphosphate. Where the dark appearance of the particles in the washing agent composition is to be suppressed, this can be achieved, for example, by embedding the particles in droplets of a whitish meltable substance ("water-soluble wax") or, preferably, by encapsulating the particles in a melt consisting of, for example, a water-soluble wax, as described in EP-A-0 323 407, a white solid (e.g. titanium dioxide) being added to the melt in order to reinforce the masking effect of the capsule.

A further aspect of the invention is a shading process for textile fibre materials characterized in that the textile fibre material is treated with encapsulated phthalocyanine particles, said particles comprising
a) at least one water-soluble phthalocyanine compound, and
b) gelatine having a bloom strength of 2 to 80 as encapsulating material.

In such a shading process the particles of the invention are typically used in a detergent or washing agent composition. The amount of the compounds used is, for example, from 0.0001 to 1% by weight, preferably from 0.001 to 0.5% by weight, based on the weight of the textile material.

Examples of suitable textile fibre materials are materials made of silk, wool, polyamide, acrylics or polyurethanes, and, in particular, cellulosic fibre materials and blends of all types. Such fibre materials are, for example, natural cellulose fibres, such as cotton, linen, jute and hemp, and regenerated cellulose. Preference is given to textile fibre materials made of cotton. Also suitable are hydroxyl-containing fibres which are present in mixed fabrics, for example mixtures of cotton with polyester fibres or polyamide fibres.

The shading composition may be in any physical form, preferably in a solid form. Typical solid forms are powder, tablets or granules. Granules are preferred as solid formulation.

The inventive shading process is part of a laundry washing process. It can be part of any step of the laundry washing process (pre-soaking, main washing and after-treatment). The process can be carried out in a washing machine as well as by hand. The usual temperature is between 5°C and 95°C.

The washing or cleaning agents are usually formulated that the washing liquor has a pH value of about 6.5 - 11, preferably 7.5 - 11 during the whole washing procedure.

The liquor ratio in the washing process is usually 1:4 to 1:40, preferably 1:4 to 1:30.

The following Examples illustrate the invention:

### EXAMPLES

### 1. Preparation of zinc phthalocyanine sulphonic acid conjugate with 4,4'-[[6-[(3-aminophenyl)amino]-1,3,5-triazine-2,4-diyl]diimino]bis[5-hydroxy-6-[2-(1-naphthalenyl)diazenyl]-2,7-naphthalenedisulphonic acid (CAS-No. 1159843-59-0)

### a) Acetylation of H-acid

191.9 g (0.5 mol) 4-amino-5-hydroxy-naphthalene-2,7-disulphonic acid (83%, CAS-No. 90-20-0) are suspended in 500 ml water and dissolved at pH 7 by addition of 48.6 ml aqueous NaOH (30%). 92.1 g acetic acid anhydride are slowly added within 10 minutes. The reaction mixture is cooled to 10°C by addition of 250.0 g ice. A pH-level of 7 is adjusted by addition of 118.3 ml aqueous NaOH (30%). 56.2 ml aqueous NaOH (30%) are added subsequently. A pH-level of 10.5 is maintained for 1 hour at a temperature of 30°C by addition of 4.8 ml aqueous NaOH (30%). By addition of 32.9 ml aqueous HCl (32%) the solution is adjusted to a pH-level of 7.2. After cooling to 20°C with 180 g ice, 1594 g solution of acetylated H-acid (ca. 0.5 mol) is obtained.

### b) Diazotation and coupling of 1-naphthylamine

57.3 g (0.4 mol) 1-naphthylamine is added with stirring as a melt to a mixture of 800 ml water and 40.0 ml aqueous HCl (32%). Aqueous HCl (97.2 ml, 32%) is added, and the solution is cooled to 0°C with 530 g ice. 90 ml of aqueous sodium nitrite (4N) is added within 15 minutes. During the addition, the temperature is maintained below 4°C. After further addition of 11 ml aqueous sodium nitrite, the reaction mixture is stirred for 30 minutes. 1 Mol of sulphamic acid is added subsequently to decompose any remaining nitrite.

To the suspension thus obtained, 1275.0 g (0.4 mol) of the acetylated H-acid (pH 4.8) prepared as described above under a) is poured within a minute. A pH-level of 7.5 is adjusted with 327 ml of aqueous sodium carbonate solution (20% w/v). The solution is stirred at room temperature for 12 hours. The total volume of reaction solution is about 3.4 I. For hydrolysis, 340 ml aqueous NaOH (30%) are added to the reaction mixture, followed by heating to 90°C for 3 hours. A pH-level of 7.5 is adjusted by the addition of 292.5 ml of aqueous HCl (32%). The violet suspension is stirred at room temperature for 12 hours. The volume of the reaction solution is about 4 I. The formed precipitate is filtered off to yield 518.7 g (84.4%) 5-amino-4-hydroxy-3-[2-(1-naphthalenyl)diazenyl]-2,7-naphthalenedisulphonic acid (CAS-No. 103787-67-3) as a paste.

### c) Preparation of 4,4'-[[6-[(3-aminophenyl)amino]-1,3,5-triazine-2,4-diyl]diimino]bis[5-hydroxy-6-[2-(1-naphthalenyl)diazenyl]-2,7-naphthalenedisulphonic acid ("Dye", CAS-No. 1159843-59-0).

An aqueous solution of 0.060 mol 5-amino-4-hydroxy-3(naphthalene-1-ylazo)-naphthalene-2,7-disulphonic acid is stirred at room temperature. A suspension consisting of 100 ml of ice water, 0.1 g disodium hydrogen tetraoxophosphate and 5.53 g (0.03 mol) cyanuric chloride is added. The reaction mixture is adjusted with aqueous NaOH (30%) and maintained at pH 7. After 30 minutes, the reaction mixture is heated to 70°C and maintained at a pH-level of 7 for several hours until the coupling reaction with cyanuric chloride is complete as indicated by LC.

To this solution (ca. 0.030 mol intermediate), a solution of 5.59 g (0.0031 mol) m-phenylenediamine dihydrochloride in 50 ml water is added. The reaction mixture is heated to 95°C. A pH value of 8.5 is maintained by addition of aqueous NaOH (30%). The reaction is monitored by LC. After 3 hours, the reaction mixture is cooled to room temperature and a volume of 950 ml solution is obtained. For isolation of the product, 237.5 g sodium chloride is added. The reaction mixture is stirred for another 12 hours. The formed precipitate is filtered off and dried to give 42.2 g dye (UVvis λmax: 536 nm).

### d) Sulphonation and sulphonyl chloride formation of zinc(II) phthalocyanine (mono- and bis-sulphonated zinc phthalocyanines)

Oleum (2500 g, 10%) is warmed up and stirred at 46°C. 500 g (0.87 mol) zinc phthalocyanine is added in portions within one hour. The reaction mixture is heated to 80°C and stirred for 24 hours at that temperature. Heating is discontinued and the reaction mass is slowly poured into 4000 g of an ice/water mixture. By the addition of sodium hydroxide solution (30%), the suspension is adjusted to pH 7 while keeping the temperature between 15-25°C by external cooling. The mixture is stirred for another eight hours and the pH is adjusted to a value of 7 again. The formed precipitate is filtered off, washed twice with water (2 liters) and dried in vacuum at 55°C to give a mixture of essentially mono- and bis-sulphonated zinc phthalocyanines (608 g, 86% yield) as a dark blue solid.

142.5 g of this dry mixture is slowly added to 680 ml (1190 g, 10.2 mol) chlorosulphuric acid. The reaction mixture is heated to 84-87°C and main¬tained at this temperature for 30 minutes. 80 ml (131.2 g, 1.103 mol) thionyl chloride is added dropwise within one hour and stirring is continued for another two hours. External heating is discontinued and the reaction mixture is poured into 9000 g of a water/ice mixture. The formed precipitate is filtered off and washed with 200 ml water to give a crude mixture of sulphonyl chlorides.

### e) Preparation of zinc(II) phthalocyanine dye conjugate

The crude filter cake prepared as given above under d) (approx. 0.2 mol) is suspended in a freshly prepared ice-cold water/dimethoxyethane 1:1 (v/v; 4 liters) mixture. The reaction solution is immediately adjusted to pH 4-5 with aqueous NaOH. The dye prepared as given above under c) (226 g, 0.2 mol) is dissolved in 2 I water and added with stirring. The reaction mixture is stirred for 25°C for 12 hours. The reaction mixture is maintained at a pH-level of 7 with aqueous NaOH (32%). The reaction mixture is monitored by TLC and LC. Optionally, the reaction mixture is heated to 50°C to ensure complete conversion.

The mixture is evaporated to dryness under vacuum at 60-70°C to remove organic volatiles. The dye conjugate is diluted with water to a concentration of 10.5% w/w with respect to the dry weight (of which NaCl = 11.7%, Na2SO4 16.11% and residual H2O=4.9% w/w; equals to 7.14% w/w total active material); main conjugate signals in ESI-MS [M+]: 1767 and 1847 along with minor amounts of 1927).

### 2. Test methods

### a) Spotting tests

The encapsulated zinc(II) phthalocyanine dye conjugate of each of the Examples given under 3 are weighted into a detergent and then thoroughly mixed using a turbula laboratory mixer until a homogenous distribution in the ECE 77 detergent is achieved (ECE reference detergent 77, from EMPA Test Materials). A concentration of 200 ppm of active dye conjugate is chosen for all tests.

The spotting test used for evaluation of the encapsulated zinc(II) phthalocyanine dye conjugate is outlined in WO 2003/018740. Six 15x15 cm pieces of white bleached woven non-mercerised cotton are placed flat on the bottom of a bowl containing 1 I of tap water. 10 g of ECE 77 detergent, containing the encapsulated dye conjugates of the respective Examples given under 3 are spread on the cloth and then left for 10 minutes. Then the cloth is thoroughly rinsed, dried and then evaluated on a scale ranging from 1 (no discoloration of the fabric, no spots) to 5 (full spotting).

### b) Wash performance (Exhaustion onto cotton fabrics)

Bleached cotton is washed for 15 minutes at 30°C with ECE 77 detergent at a 20 g/kg fabric and a liquor ratio of 1:20, in the presence of each of the encapsulated zinc(II) phthalocyanine dye conjugate of the Examples given under 3 (concentration of 20 mg/l) in LINITEST equipment (Atlas). Before the addition of cotton, the composition is allowed to stand for 1 minute at ambient temperature. After rinsing with tap water, spin-drying and ironing, the exhaustion of the active dye on the fabric is measured by reflectance spectroscopy by using the Kubelka/Munk formula K/S at 560 nm. Each K/S-value given in the Examples under 3 represents the K/S-value of the corresponding Example, from which the K/S-value determined for the corresponding encapsulate comprising no zinc(II) phthalocyanine dye conjugate, has been subtracted. The higher the so obtained K/S-value, the higher the exhaustion of the dye conjugate on the cotton fabric, i.e. its hueing ability.

### 3. Encapsulated dye conjugates

### Example 1 - Encapsulated dye conjugate product with gelatine of bloom 11

30 g gelatine of bloom 106 and 270 g gelatine of bloom 0 were dissolved in 875 g of the zinc(II) phthalocyanine dye conjugate solution obtained according to 1 e) at 62°C under agitation. After 120 minutes, 45 g of coconut oil was added to the aqueous solution under slow agitation. The resulting mixture was then vigorously emulsified for 30 minutes while maintaining the temperature of around 60°C. The resulting dispersion was diluted with 350 g water.

Subsequently the diluted dispersion was atomized into a spray drying tower at about 80°C, where the dispersion particles were covered with a thin layer of powdering starch and dried at 40°C for 150 minutes.

The resulting dry powder was sieved and the fraction 120 mesh to 60 mesh (ASTM E 11-70 (1995)) was collected and tested.

The final product had the following characteristics:
Bloom: 11, Spotting performance: 4, Wash performance: K/S = 0.014

### Example 2 - Encapsulated dye conjugate product with gelatine of bloom 21

60 g gelatine of bloom 106 and 240 g gelatine of bloom 0 were dissolved in 1050 g of the zinc(II) phthalocyanine dye conjugate solution obtained according to 1 e) at 62°C under agitation. After 120 minutes, 45 g of coconut oil was added to the aqueous solution under slow agitation. The resulting mixture was then vigorously emulsified for 30 minutes while maintaining the temperature of around 60°C. The resulting dispersion was diluted with 350 g water.

Subsequently the diluted dispersion was atomized into a spray drying tower at about 80°C, where the dispersion particles were covered with a thin layer of powdering starch and dried at 40°C for 150 minutes.

The resulting dry powder was sieved and the fraction 120 mesh to 60 mesh (ASTM E 11-70 (1995)) was collected and tested.

The final product had the following characteristics:
Bloom: 21, Spotting performance: 3.5 , Wash performance: K/S = 0.014

### Example 3 - Encapsulated dye conjugate product with gelatine of bloom 32

90 g gelatine of bloom 106 and 210 g gelatine of bloom 0 were dissolved in 1250 g of the zinc(II) phthalocyanine dye conjugate solution obtained according to 1 e) at 62°C under agitation. After 120 minutes, 45 g of coconut oil was added to the aqueous solution under slow agitation. The resulting mixture was then vigorously emulsified for 30 minutes while maintaining the temperature of around 60°C. The resulting dispersion was diluted with 480 g water.

Subsequently the diluted dispersion was atomized into a spray drying tower at about 80°C, where the dispersion particles were covered with a thin layer of powdering starch and dried at 40°C for 150 minutes.

The resulting dry powder was sieved and the fraction 120 mesh to 60 mesh (ASTM E 11-70 (1995)) was collected and tested.

The final product had the following characteristics:
Bloom: 32, Spotting performance: 3, Wash performance: K/S = 0.016

### Example 4 - Encapsulated dye conjugate product with gelatine of bloom 48

135 g gelatine of bloom 106 and 165 g gelatine of bloom 0 were dissolved in 900 g of the zinc(II) phthalocyanine dye conjugate solution obtained according to 1 e) at 62°C under agitation. After 120 minutes, 45 g of coconut oil was added to the aqueous solution under slow agitation. The resulting mixture was then vigorously emulsified for 30 minutes while maintaining the temperature of around 60°C. The resulting dispersion was diluted with 930 g water.

Subsequently the diluted dispersion was atomized into a spray drying tower at about 80°C, where the dispersion particles were covered with a thin layer of powdering starch and dried at 40°C for 150 minutes.

The resulting dry powder was sieved and the fraction 120 mesh to 60 mesh (ASTM E 11-70 (1995)) was collected and tested.

The final product had the following characteristics:
Bloom: 48, Spotting performance: 4.5, Wash performance: K/S = 0.013

### Comparative Example - Encapsulated dye conjugate product with gelatine of bloom 0

300 g gelatine of bloom 0 was dissolved in 750 g of the zinc(II) phthalocyanine dye conjugate solution obtained according to 1 e) at 62°C under agitation. After 120 minutes, 45 g of coconut oil was added to the aqueous solution under slow agitation. The resulting mixture was then vigorously emulsified for 30 minutes while maintaining the temperature of around 60°C. The resulting dispersion was diluted with 350 g water.

Subsequently the diluted dispersion was atomized into a spray drying tower at about 80°C, where the dispersion particles were covered with a thin layer of powdering starch and dried at 40°C for 150 minutes.

The resulting dry powder was sieved and the fraction 120 mesh to 60 mesh (ASTM E 11-70 (1995)) was collected and tested.

The final product had the following characteristics:
Bloom: 0, Spotting performance: 5, Wash performance: K/S = 0.013

In the above Examples 1 to 4 and the Comparative Example the following gelatine grades were used:
Gelatine Bloom 0: "Rousselot ASF" of Rousselot NV, Gent, Belgium
Gelatine Bloom 106: "Gelatine 106 bloom" by PB Gelatins, Vilvorde, Belgium

The above Examples demonstrate that a higher value of the bloom strength of the gelatine results in encapsulated zinc(II) phthalocyanine dye conjugates having better properties with respect to spotting performance and good wash performance, when compared with corresponding encapsulated zinc(II) phthalocyanine dye conjugates prepared by use of gelatine having a bloom strength of 0.

## Claims

1. Encapsulated phthalocyanine particles, said particles comprising
a) at least one water-soluble phthalocyanine compound, and
b) gelatine having a bloom strength of 2 to 80 as encapsulating material.

2. Particles according to claim 1, comprising
a) 0.1 - 20 wt.-% of at least one water-soluble phthalocyanine compound;
b) 5 - 60 wt.-% of gelatine having a bloom strength of 2 to 80;
c) 0 - 10 wt.-% of an oil,
d) 0 - 90 wt.-% of a powdering agent,
e) 0 - 90 wt.-% of further additives suitable for the preparation of solid agglomerates, and
f) 0 - 15 wt.-% of water,
provided that the sum of components a), b), c), d), e) and f) amounts up to 100 wt.-%.

3. Particles according to claim 1 or 2, comprising
a) 1 - 15 wt.-% of at least one water-soluble phthalocyanine compound;
b) 5 - 50 wt.-% of gelatine having a bloom strength of 2 to 80;
c) 0.1 - 5 wt.-% of an oil,
d) 1 - 90 wt.-% of a powdering agent,
e) 0 - 90 wt.-% of further additives suitable for the preparation of solid agglomer-ates, and
f) 0.1 - 15 wt.-% of water,
provided that the sum of components a), b), c), d), e) and f) amounts up to 100 wt.-%.

4. Particles according to any of claims 1 to 3, comprising, as water-soluble phthalocyanine compound a), at least one phthalocyanine complex compound of the formula
(PC)-L-(D) (1),
to which the substituent of at least one mono-azo dye is attached by the linking group L,
Wherein
PC represents the Zn(II), Fe(II), Ca(II), Mg(II), Na(I), K(I), Al, Si(IV), P(V), Ti(IV) or Cr(VI) metal-containing phthalocyanine structure ;
D represents the substituent of a mono-azo dye; and
L represents a group 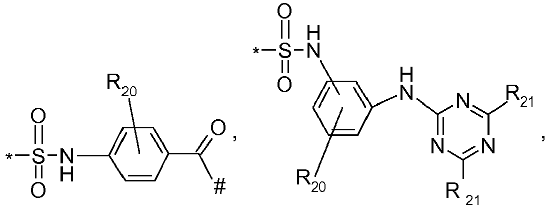 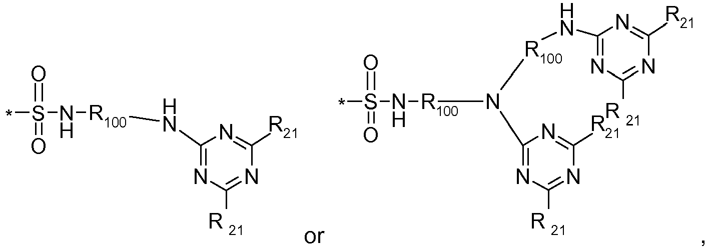 wherein
R₂₀ represents hydrogen, C₁-C₈alkyl, C₁-C₈alkoxy or halogen;
R₂₁ represents D, hydrogen, OH, Cl or F, provided that at least one is D;
R₁₀₀ represents C₁-C₈alkylene;
* marks the point of attachment of PC; and
# marks the point of attachment of the substituent D of the mono-azo dye.

5. Particles according to claim 4, wherein the water-soluble phthalocyanine complex compound (1) corresponds to the formula 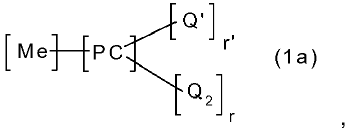 wherein
PC represents the porphyrine structure,
Me represents the central metal atom or central metal group coordinated to PC, which is selected from the group consisting of Zn, Fe, Ca, Mg, Na, K, Al-Z₁, Si(IV)-(Z₁)₂, Ti(IV)-(Z₁)₂ and Sn(IV)-(Z₁)₂;
Z₁ represents C₁-C₈alkanolate, OH⁻, R₀COO⁻, ClO₄⁻, BF₄⁻, PF₆⁻, R₀SO₃⁻, SO₄²⁻, NO₃⁻, F⁻, Cl-, Br⁻, I⁻, citrate, tartrate or oxalate, wherein R₀ is hydrogen or C₁-C₁₈alkyl;
r represents 0 or a numeral from 1 to 3;
r' represents a numeral from 1 to 4;
each Q₂ independently of one another represents -SO₃⁻M⁺ or the group -(CH₂)ₘ-COO⁻M⁺; wherein M⁺ is H⁺, an alkali metal ion or the ammonium ion and m is 0 or a numeral from 1 to12;
each Q' independently of one another represents the segment of the partial formula-L-D,
Wherein
D represents the substituent of a mono-azo dye; and
L represents a group 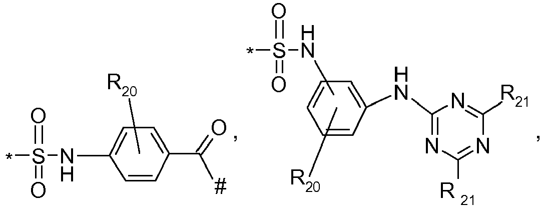 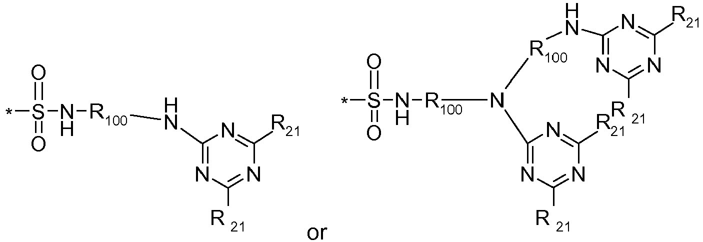 wherein
R₂₀ represents hydrogen, C₁- C₈alkyl, C₁-C₈alkoxy or halogen;
R₂₁ represents D, hydrogen, OH, Cl or F, provided that at least one of R₂₁ is D;
R₁₀₀ represents C₁-C₈alkylene;
* marks the point of attachment of Me-PC; and
# marks the point of attachment of the substituent D of the mono-azo dye.

6. Particles according to claim 4, wherein the water-soluble phthalocyanine complex compound (1) corresponds to the formula (2a) 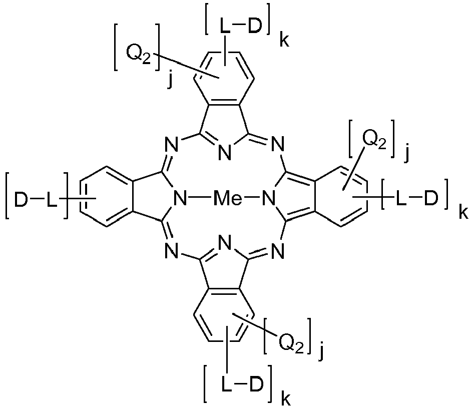 wherein
Me represents Zn, Al-Z₁, Si(IV)-(Z₁)₂ or Ti(IV)-(Z₁)₂, wherein Z₁ is chloride, fluoride, bromide or hydroxide;
each Q₂ independently of one another represents -SO₃⁻M⁺ or the group -(CH₂)ₘ-COO⁻M⁺, wherein M⁺ is H⁺, an alkali metal ion or the ammonium ion and m is 0 or a numeral from 1 to12;
each k is independently selected from 0 and 1, each j is independently selected from 0 and 1-k,
D represents the substituent of a mono-azo dye; and
L represents a group 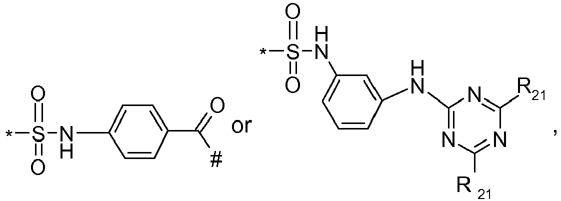 wherein
R₂₁ represents D, hydrogen, OH, Cl or F, provided that at least one is D;
* marks the point of attachment of PC; and
# marks the point of attachment to D.

7. Particles according to claim 4, wherein the water-soluble phthalocyanine complex compound (1) corresponds to the formula 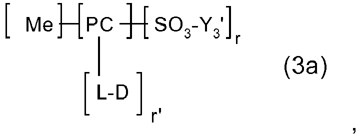 wherein
PC, L and D are as defined in claim 4;
Me is Zn or Al-Z₁, Z₁ is chlorine, fluorine, bromine or hydroxy;
Y₃' is hydrogen; an alkali metal ion or ammonium ion;
r is zero or a numeral from 1-3; and
r' is a numeral from 1 to 4.

8. Particles according to claim 6 or 7, wherein Me represents Zn.

9. Particles according to claim 4, wherein D represents the substituent of a mono- azo dye of the partial formulae Xa, Xb, Xc or Xd: 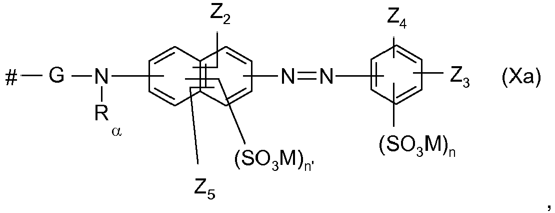 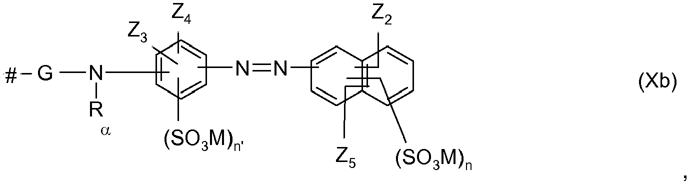 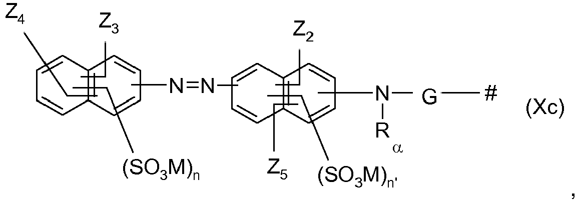 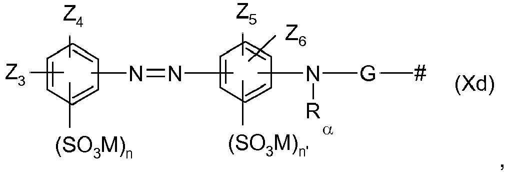 wherein
# marks the point of attachment of the bridging group L;
R_{α} represents hydrogen, C₁-C₄alkyl, C₁-C₂alkyl which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, straight chain or branched C₃-C₄-alkyl which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, aryl, aryl which is substituted by at least one substituent selected from the group consisting of hydroxy, cyano, SO₃H, NH₂, carboxy, carbo-C₁-C₄alkoxy, C₁-C₄alkoxy and C₁-C₄alkyl;
Z₂, Z₃, Z₄, Z₅ and Z₆
independently of one another represent hydrogen, hydroxy, C₁-C₄alkyl, C₁-C₂alkyl which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, straight chain or branched C₃-C₄-alkyl which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, C₁-C₄alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, straight chain or branched C₃-C₄alkoxy which is substituted by at least one substituent selected from the group consisting of hydroxy, cyano, SO₃H, NH₂, carboxy, carbo-C₁-C₄alkoxy, C₁-C₄alkoxy, phenyl, naphthyl and pyridyl, halogen, -SO₂CH₂CH₂SO₃H, NO₂, COOH, -COOC₁-C₄alkyl, NH₂, NHC₁-C₄alkyl, wherein the alkyl group may be substituted by at least one substituent selected from the group consisting of OH, NH₂, C₁-C₄alkyl, CN and COOH, N(C₁-C₄alkyl)C₁-C₄alkyl, wherein the alkyl groups may independently of one another be substituted by at least one substituent selected from the group consisting of OH, NH₂, C₁-C₄alkyl, CN and COOH, NH-aryl, NH-aryl, wherein aryl is substituted by at least one substituent selected from the group consisting of hydroxy, cyano, SO₃H, NH₂, carboxy, cargo-C₁-C₄alkoxy, C₁-C₄alkyl and C₁-C₄alkoxy, or represents NHCOC₁-C₄alkyl or NHCOOC₁-C₄alkyl;
G represents the direct bond, -COOC₁-C₄alkylene, arylene; arylene which is substituted by at least one substituent selected from the group consisting of hydroxy, cyano, NO₂, SO₃H, NH₂, carboxy, carbo-C₁-C₄alkoxy, C₁-C₄alkoxy and C₁-C₄alkyl, C₁-C₄alkylene, C₁-C₄-alkylene substituted by at least one substituent selected from the group consisting of hydroxy, cyano, NO₂, SO₃H, NH₂, carboxy, carbo-C₁-C₄alkoxy, C₁-C₄alkoxy and C₁-C₄alkyl, or represents -CO-arylene;
n represents 0; 1; 2 or 3;
n' represents 0; 1 or 2; and
each M independently of one another represents hydrogen; an alkali metal ion or an ammonium ion.

10. Particles according to claim 4, wherein D represents the substituent of a mono- azo dye of the partial formulae Xla, Xlb, Xlc or Xld: 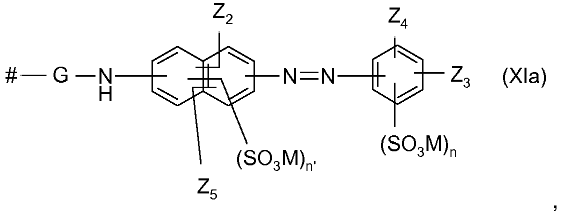 wherein
# marks the point of attachment of the bridging group L;
Z₂ represents C₁-C₂-alkyl, C₁-C₂-alkyl which is substituted by at least one substituent selected from the group consisting of hydroxy, cyano, SO₃H, NH₂, carboxy, cargo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₂alkoxy, C₁-C₂alkyl, phenyl, naphthyl and pyridyl, or represents OH;
Z₃ represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₂alkoxy, C₁-C₂alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN and COOH, or represents NHCOC₁-C₂alkyl or NHCOOC₁-C₂alkyl;
Z₄ represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN and COOH, or represents NHCOC₁-C₂alkyl or NHCOOC₁-C₂alkyl;
Z₅ represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl;
G represents the direct bond, COOC₁-C₂alkylene, arylene, arylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl, C₁-C₂alkylene or C₁-C₂-alkylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl;
n represents 0, 1, 2 or 3;
n' represents 0, 1 or 2; and
each M independently of one another represents hydrogen, Na⁺ or K⁺; 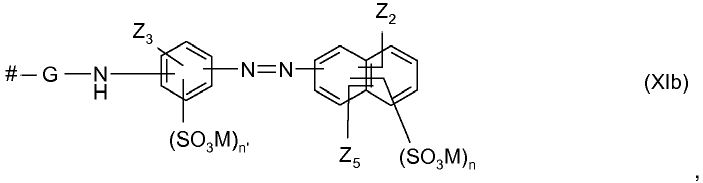
Wherein
# marks the point of attachment of the bridging group L;
Z₂represents C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₂alkoxy, C₁-C₂alkyl, phenyl, naphthyl and pyridyl or represents OH;
Z₃ is hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₂alkoxy, C₁-C₂alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN or COOH or represents NHCOC₁-C₂alkyl or NHCOOC₁-C₂alkyl;
Z₅ represents hydrogen, C₁-C₂-alkyl or C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl;
G represents the direct bond, COOC₁-C₂alkylene, arylene, arylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl, C₁-C₂alkylene or C₁-C₂-alkylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl;
n represents 0, 1, 2 or 3;
N' is 0, 1 or 2; and
each M independently of one another represents hydrogen, Na⁺ or K⁺; 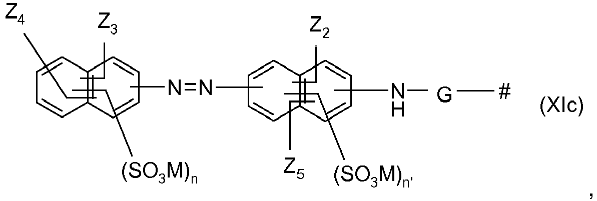
Wherein
# marks the point of attachment of the bridging group L;
Z₂represents hydrogen, hydroxy, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy or C₁-C₂alkoxy which is substituted by at least one substituent selected from the group consisting of hydroxy, cyano, SO₃H, NH₂, carboxy, cargo-C₁-C₄alkoxy, C₁-C₄alkyl, phenyl, naphthyl and pyridyl, or represents OH or NO₂;
Z₃represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₂alkoxy, C₁-C₂alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN and COOH, or represents NHCOC₁-C₂alkyl or NHCOOC₁-C₂alkyl;
Z₄represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy or C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN and COOH, or represents NHCOC₁-C₂alkyl or NHCOOC₁-C₂alkyl;
Z₅represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, or represents NO₂;
G represents the direct bond, COOC₁-C₂alkylene, arylene, arylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl, C₁-C₂alkylene or C₁-C₂-alkylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl,
n represents 0, 1, 2 or 3;
n' represents 0, 1 or 2; and
each M independently of one another represents Na⁺ or K⁺; 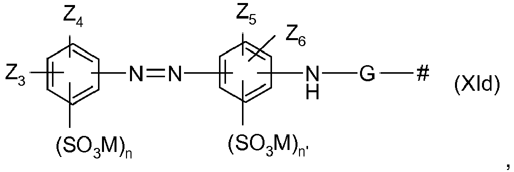
Wherein
# marks the point of attachment of the bridging group L;
Z₃ represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, or represents SO₂CH₂CH₂SO₃H or NO₂;
Z₄ represents C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, OH, or represents SO₂CH₂CH₂SO₃H, or NO₂;
Z₅ represents hydrogen, C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, carbo-C₁-C₄alkoxy, C₁-C₄alkyl, phenyl, naphthyl and pyridyl, OH, NO₂, NH₂, NHC₁-C₂alkyl, wherein the alkyl group may be substituted by at least one substituent selected from the group consisting of OH, NH₂, C₁-C₂alkyl, CN and COOH, or represents NHCOC₁-C₂alkyl or NHCOOC₁-C₂alkyl;
Z₆ represents C₁-C₂-alkyl, C₁-C₂-alkyl which is substituted by at least one substituent selected from the group consisting of hydroxy, cyano, SO₃H, NH₂, carboxy, carbo-C₁-C₂alkoxy, C₁-C₂alkoxy, phenyl, naphthyl and pyridyl, C₁-C₂alkoxy, C₁-C₂alkoxy which is substituted by at least one substituent selected from the group consisting of hydroxy, cyano, SO₃H, NH₂, carboxy, cargo-C₁-C₄alkoxy, C₁-C₄alkyl, phenyl, naphthyl and pyridyl, or represents NO₂;
G represents the direct bond, COOC₁-C₂alkylene, arylene, arylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl, C₁-C₂alkylene or C₁-C₂-alkylene which is substituted by at least one substituent selected from the group consisting of hydroxy, cyano, NO₂, SO₃H, NH₂, carboxy, carbo-C₁-C₂alkoxy, C₁-C₂alkoxy and C₁-C₂alkyl;
n represents 0, 1, 2 or 3;
n' represents 0, 1 or 2; and
each M independently of one another represents hydrogen, Na⁺ or K⁺.

11. Particles according to claim 4, wherein D is selected from the group consisting of compounds, wherein the partial formulae 10, 11, 12, 13 and 14: 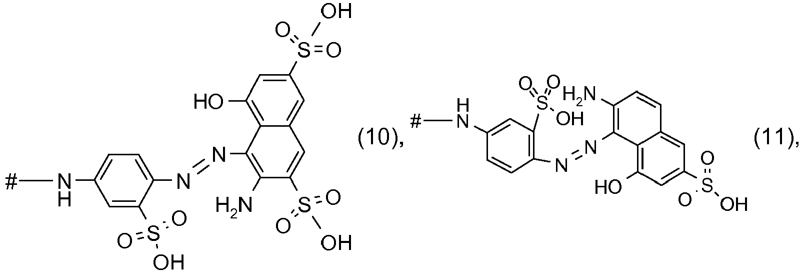 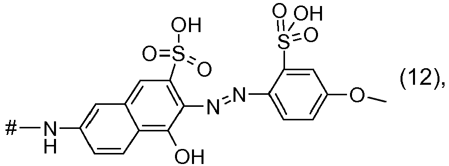 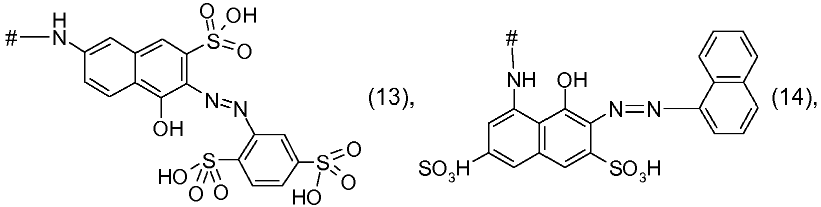 are present and wherein # marks the point of attachment of the bridging group L.

12. Particles according to any of claims 1 to 11, wherein the gelatine component b) has a bloom strength of 2 to 50.

13. Particles according to any of claims 1 to 11, wherein the gelatine component b) has a bloom strength of 5 to 50.

14. Particles according to any of claims 2 to 13, wherein the oil component c) is a triglyceride oil.

15. Particles according to any of claims 2 to 14, wherein the powdering agent component d) is starch or modified starch.

16. Particles according to any of claims 2 to 15, wherein the further additives of component e) are selected from the group consisting of anionic dispersants, disintegrants, fillers, water-insoluble or water-soluble dyes or pigments; optical brighteners, zeolites, talcum, powdered cellulose, fibrous cellulose, microcrystalline cellulose, starch, dextrin, kaolin, TiO₂, SiO₂ and magnesium trisilicate.

17. A process for the preparation of particles according to claim 1, comprising
i) dissolving at least one water-soluble phthalocyanine compound in an aqueous medium,
ii) dissolving gelatine having a bloom strength of 2 to 80 in the resulting solution, or adding an aqueous solution of said gelatine,
iii) converting the mixture thus obtained into droplets, and
iv) reducing the moisture content of the resulting particles.

18. A washing agent composition, comprising
A) particles as defined in claim 1; and
B) further additives suitable for the preparation of washing agents.

19. A washing agent composition according to claim 18, comprising
A) 0.001 to 1.0 wt.-% of particles as defined in claim 1; and
B) 99.0 to 99.999 wt.-% further additives suitable for the preparation of washing agents.

## Patentansprüche

1. Verkapselte Phthalocyaninteilchen, wobei die Teilchen Folgendes umfassen:
a) mindestens eine wasserlösliche Phthalocyaninverbindung und
b) Gelatine mit einer Bloom-Festigkeit von 2 bis 80 als Verkapselungsmaterial.

2. Teilchen nach Anspruch 1, umfassend
a) 0,1-20 Gew.-% mindestens einer wasserlöslichen Phthalocyaninverbindung;
b) 5-60 Gew.-% Gelatine mit einer Bloom-Festigkeit von 2 bis 80;
c) 0-10 Gew.-% eines Öls,
d) 0-90 Gew.-% eines Bepuderungsmittels,
e) 0-90 Gew.-% weiterer Additive, die für die Herstellung fester Agglomerate geeignet sind, und
f) 0-15 Gew.-% Wasser,
mit der Maßgabe, dass sich die Summe der Komponenten a), b), c), d), e) und f) auf 100 Gew.-% beläuft.

3. Teilchen nach Anspruch 1 oder 2, umfassend
a) 1-15 Gew.-% mindestens einer wasserlöslichen Phthalocyaninverbindung;
b) 5-50 Gew.-% Gelatine mit einer Bloom-Festigkeit von 2 bis 80;
c) 0,1-5 Gew.-% eines Öls,
d) 1-90 Gew.-% eines Bepuderungsmittels,
e) 0-90 Gew.-% weiterer Additive, die für die Herstellung fester Agglomerate geeignet sind, und
f) 0,1-15 Gew.-% Wasser,
mit der Maßgabe, dass sich die Summe der Komponenten a), b), c), d), e) und f) auf 100 Gew.-% beläuft.

4. Teilchen nach einem der Ansprüche 1 bis 3, umfassend als wasserlösliche Phthalocyaninverbindung a) mindestens eine Phthalocyaninkomplexverbindung der Formel
(PC)-L-(D) (1) ,
an die der Substituent mindestens eines Monoazofarbstoffs über die Brückengruppe L gebunden ist,
wobei
PC für die Zn (II)-, Fe (II)-, Ca (II)-, Mg (II)-, Na(I)-, K(I)-, AI-, Si(IV)-, P(V)-, Ti(IV)-oder Cr(VI)-metallhaltige Phthalocyaninstruktur steht;
D für den Substituenten eines Monoazofarbstoffs steht und
L für eine Gruppe 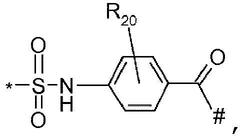 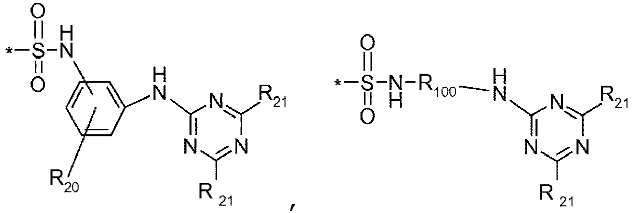
oder 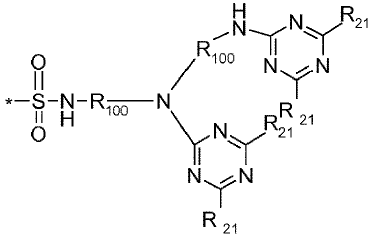 steht, wobei
R₂₀ für Wasserstoff, C₁-C₈-Alkyl, C₁-C₈-Alkoxy oder Halogen steht;
R₂₁ für D, Wasserstoff, OH, Cl oder F steht, mit der Maßgabe, dass mindestens eines für D steht; R₁₀₀ für C₁-C₈-Alkylen steht;
* den Punkt der Anbindung von PC kennzeichnet und
# den Punkt der Anbindung des Substituenten D des Monoazofarbstoffs kennzeichnet.

5. Teilchen nach Anspruch 4, wobei die wasserlösliche Phthalocyaninkomplexverbindung (1) der Formel 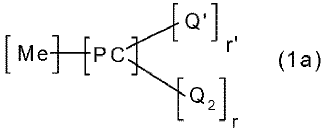 entspricht, wobei
PC für die Porphyrinstruktur steht,
Me für das zentrale Metallatom bzw. die zentrale Metallgruppe, das bzw. die mit PC koordiniert ist und aus der Gruppe bestehend aus Zn, Fe, Ca, Mg, Na, K, Al-Z₁, Si (IV) - (Z₁)₂, Ti (IV) - (Z₁)₂ und Sn (IV) - (Z₁)₂ ausgewählt ist, steht;
Z₁ für Cᵢ-C₈-Alkanolat, OH-, R₀COO⁻, ClO₄⁻, BF₄⁻, PF₆⁻, R₀SO₃⁻, SO₄²⁻, NO₃⁻, F-, Cl⁻, Br⁻, I⁻, Citrat, Tartrat oder Oxalat steht, wobei R₀ für Wasserstoff oder C₁-C₁₈-Alkyl steht;
r für 0 oder eine Zahl von 1 bis 3 steht;
r' für eine Zahl von 1 bis 4 steht;
Q₂ jeweils unabhängig voneinander für -SO₃-M⁺ oder die Gruppe - (CH₂)ₘ-COO-M⁺ steht; wobei M⁺ für H⁺, ein Alkalimetallion oder das Ammoniumion steht und m für 0 oder eine Zahl von 1 bis 12 steht;
Q' jeweils unabhängig voneinander für das Segment der Teilformel -L-D steht,
wobei
D für den Substituenten eines Monoazofarbstoffs steht und
L für eine Gruppe 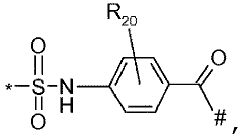 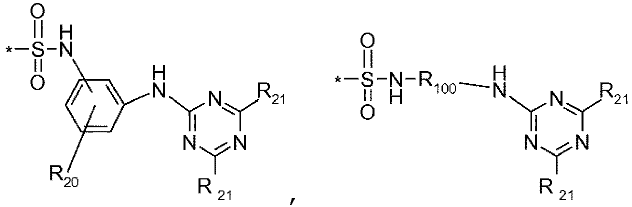
oder 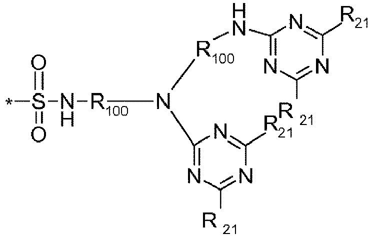 steht, wobei
R₂₀ für Wasserstoff, C₁-C₈-Alkyl, C₁-C₈-Alkoxy oder Halogen steht;
R₂₁ für D, Wasserstoff, OH, Cl oder F steht, mit der Maßgabe, dass mindestens eines für D steht; R₁₀₀ für C₁-C₈-Alkylen steht;
* den Punkt der Anbindung von Me-PC kennzeichnet und
# den Punkt der Anbindung des Substituenten D des Monoazofarbstoffs kennzeichnet.

6. Teilchen nach Anspruch 4, wobei die wasserlösliche Phthalocyaninkomplexverbindung (1) der Formel (2a) 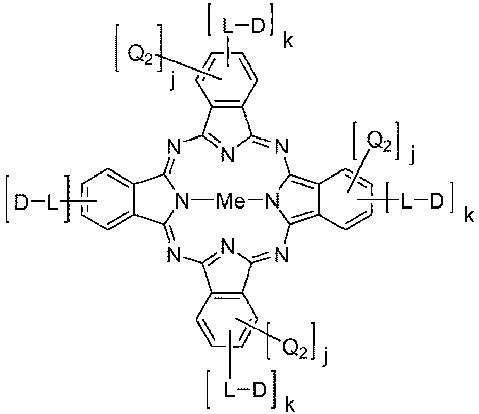 entspricht, wobei
Me für Zn, Al-Z₁, Si(IV)-(Z₁)₂ oder Ti(IV)-(Z₁)₂ steht, wobei Z₁ für Chlorid, Fluorid, Bromid oder Hydroxid steht;
Q₂ jeweils unabhängig voneinander für -SO₃⁻M⁺ oder die Gruppe - (CH₂)ₘ-COO⁻M⁺ steht; wobei M⁺ für H⁺, ein Alkalimetallion oder das Ammoniumion steht und m für 0 oder eine Zahl von 1 bis 12 steht;
k jeweils unabhängig aus 0 und 1 ausgewählt ist, jedes j unabhängig aus 0 und 1-k ausgewählt ist,
D für den Substituenten eines Monoazofarbstoffs steht und
L für eine Gruppe 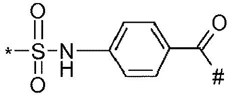
oder 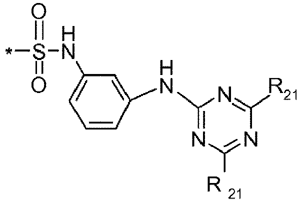 steht, wobei
R₂₁ für D, Wasserstoff, OH, Cl oder F steht, mit der Maßgabe, dass mindestens eines für D steht; * den Punkt der Anbindung von PC kennzeichnet und
# den Punkt der Anbindung von D kennzeichnet.

7. Teilchen nach Anspruch 4, wobei die wasserlösliche Phthalocyaninkomplexverbindung (1) der Formel 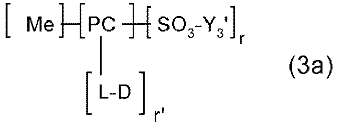 entspricht, wobei
PC, L und D wie in Anspruch 4 definiert sind;
Me für Zn oder Al-Z₁, steht, Z₁ für Chlor, Fluor, Brom oder Hydroxy steht;
Y₃' für Wasserstoff; ein Alkalimetallion oder Ammoniumion steht;
r für null oder eine Zahl von 1-3 steht und
r' für eine Zahl von 1 bis 4 steht.

8. Teilchen nach Anspruch 6 oder 7, wobei Me für Zn steht.

9. Teilchen nach Anspruch 4, wobei D für den Substituenten eines Monoazofarbstoffs der Teilformeln Xa, Xb, Xc oder Xd steht: 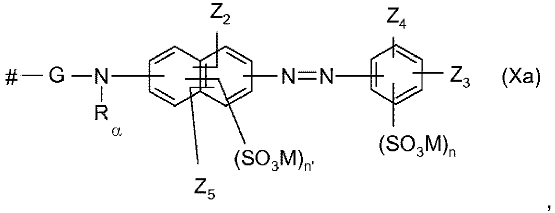 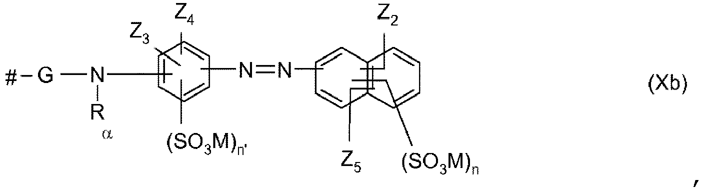 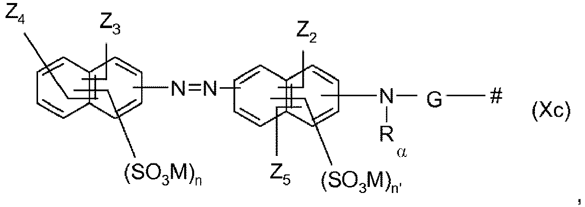 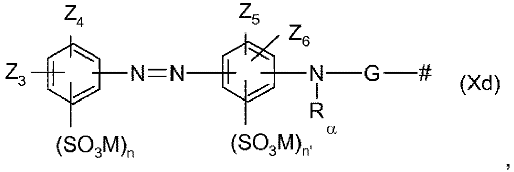 wobei
# den Punkt der Anbindung der Brückengruppe L kennzeichnet;
Rα für Wasserstoff, C₁-C₄-Alkyl, C₁-C₂-Alkyl, das durch mindestens einen Substituenten aus der Gruppe bestehend aus Hydroxy, Cyano, SO₃H, NH₂, Carboxy, Carbo-C₁-C₄-alkoxy, C₁-C₄-Alkoxy, Phenyl, Naphthyl und Pyridyl substituiert ist, geradkettiges oder verzweigtes C₃-C₄-Alkyl, das durch mindestens einen Substituenten aus der Gruppe bestehend aus Hydroxy, Cyano, SO₃H, NH₂, Carboxy, Carbo-C₁-C₄-alkoxy, C₁-C₄-Alkoxy, Phenyl, Naphthyl und Pyridyl substituiert ist, Aryl oder Aryl, das durch mindestens einen Substituenten aus der Gruppe bestehend aus Hydroxy, Cyano, SO₃H, NH₂, Carboxy, Carbo-C₁-C₄-alkoxy, C₁-C₄-Alkoxy und C₁-C₄-Alkyl substituiert ist, steht;
Z₂, Z₃, Z₄, Z₅ und Z₆
unabhängig voneinander für Wasserstoff, Hydroxy, C₁-C₄-Alkyl, C₁-C₂-Alkyl, das durch mindestens einen Substituenten aus der Gruppe bestehend aus Hydroxy, Cyano, SO₃H, NH₂, Carboxy, Carbo-C₁-C₄-alkoxy, C₁-C₄-Alkoxy, Phenyl, Naphthyl und Pyridyl substituiert ist, geradkettiges oder verzweigtes C₃-C₄-Alkyl, das durch mindestens einen Substituenten aus der Gruppe bestehend aus Hydroxy, Cyano, SO₃H, NH₂, Carboxy, Carbo-C₁-C₄-alkoxy, C₁-C₄-Alkoxy, Phenyl, Naphthyl und Pyridyl substituiert ist, C₁-C₄-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₄-alkoxy, C₁-C₄-Alkoxy, Phenyl, Naphthyl und Pyridyl substituiert ist, geradkettiges oder verzweigtes C₃-C₄-Alkoxy, das durch mindestens einen Substituenten aus der Gruppe bestehend aus Hydroxy, Cyano, SO₃H, NH₂, Carboxy, Carbo-C₁-C₄-alkoxy, C₁-C₄-Alkoxy, Phenyl, Naphthyl und Pyridyl substituiert ist, Halogen, -SO₂CH₂CH₂SO₃H, NO₂, COOH, -COO-C₁-C₄-Alkyl, NH₂, NH-C₁-C₄-Alkyl, wobei die Alkylgruppe durch mindestens einen Substituenten aus der Gruppe bestehend aus OH, NH₂, C₁-C₄-Alkyl, CN und COOH substituiert sein kann, N (C₁-C₄-Alkyl)-C₁-C₄-alkyl, wobei die Alkylgruppen unabhängig voneinander durch mindestens einen Substituenten aus der Gruppe bestehend aus OH, NH₂, C₁-C₄-Alkyl, CN und COOH substituiert sein können, NH-Aryl, NH-Aryl, wobei Aryl durch mindestens einen Substituenten aus der Gruppe bestehend aus Hydroxy, Cyano, SO₃H, NH₂, Carboxy, Carbo-C₁-C₄-alkoxy, C₁-C₄-Alkyl und C₁-C₄-Alkoxy substituiert ist, oder NHCO-C₁-C₄-Alkyl oder NHCOO-C₁-C₄-Alkyl stehen;
G für die direkte Bindung, -COO-C₁-C₄-Alkylen, Arylen, Arylen, das durch mindestens einen Substituenten aus der Gruppe bestehend aus Hydroxy, Cyano, NO₂, SO₃H, NH₂, Carboxy, Carbo-C₁-C₄-alkoxy, C₁-C₄-Alkoxy und C₁-C₄-Alkyl substituiert ist, C₁-C₄-Alkylen, C₁-C₄-Alkylen, das durch mindestens einen Substituenten aus der Gruppe bestehend aus Hydroxy, Cyano, NO₂, SO₃H, NH₂, Carboxy, Carbo-C₁-C₄-alkoxy, C₁-C₄-Alkoxy und C₁-C₄-Alkyl substituiert ist, oder -CO-Arylen steht;
n für 0, 1, 2 oder 3 steht;
n' für 0, 1 oder 2 steht und
M jeweils unabhängig voneinander für Wasserstoff, ein Alkalimetallion oder ein Ammoniumion steht.

10. Teilchen nach Anspruch 4, wobei D für den Substituenten eines Monoazofarbstoffs der Teilformeln XIa, XIb, XIc oder XId steht: 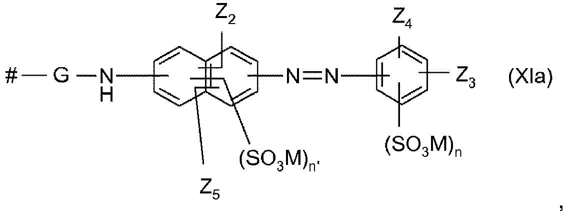 wobei
# den Punkt der Anbindung der Brückengruppe L kennzeichnet;
Z₂ für C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₂-alkoxy, C₁-C₂-Alkyl, Phenyl, Naphthyl und Pyridyl substituiert ist, oder OH steht;
Z₃ für Wasserstoff, C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₂-alkoxy, C₁-C₂-Alkyl, Phenyl, Naphthyl und Pyridyl substituiert ist, OH, NO₂, NH₂, NH-C₁-C₂-Alkyl, wobei die Alkylgruppe durch mindestens einen Substituenten aus der Gruppe bestehend aus OH, NH₂, C₁-C₂-Alkyl, CN und COOH substituiert sein kann, oder NHCO-C₁-C₂-Alkyl oder NHCOO-C₁-C₂-Alkyl steht;
Z₄ für Wasserstoff, C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₄-alkoxy, C₁-C₄-Alkyl, Phenyl, Naphthyl und Pyridyl substituiert ist, OH, NO₂, NH₂, NH-C₁-C₂-Alkyl, wobei die Alkylgruppe durch mindestens einen Substituenten aus der Gruppe bestehend aus OH, NH₂, C₁-C₂-Alkyl, CN und COOH substituiert sein kann, oder NHCO-C₁-C₂-Alkyl oder NHCOO-C₁-C₂-Alkyl steht;
Z₅ für Wasserstoff, C₁-C₂-Alkyl oder C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, steht;
G für die direkte Bindung, -COO-C₁-C₂-Alkylen, Arylen, Arylen, das durch mindestens einen Substituenten aus der Gruppe bestehend aus Hydroxy, Cyano, NO₂, SO₃H, NH₂, Carboxy, Carbo-C₁-C₂-alkoxy, C₁-C₂-Alkoxy und C₁-C₂-Alkyl substituiert ist, C₁-C₂-Alkylen oder C₁-C₂-Alkylen, das durch mindestens einen Substituenten aus der Gruppe bestehend aus Hydroxy, Cyano, NO₂, SO₃H, NH₂, Carboxy, Carbo-C₁-C₂-alkoxy, C₁-C₂-Alkoxy und C₁-C₂-Alkyl substituiert ist, steht;
n für 0, 1, 2 oder 3 steht;
n' für 0, 1 oder 2 steht und
M jeweils unabhängig voneinander für Wasserstoff, Na⁺ oder K⁺ steht; 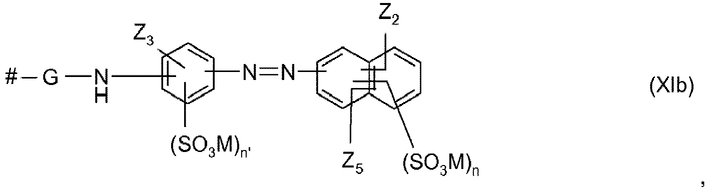
wobei
# den Punkt der Anbindung der Brückengruppe L kennzeichnet;
Z₂ für C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₂-alkoxy, C₁-C₂-Alkyl, Phenyl, Naphthyl und Pyridyl substituiert ist, oder OH steht;
Z₃ für Wasserstoff, C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₂-alkoxy, C₁-C₂-Alkyl, Phenyl, Naphthyl und Pyridyl substituiert ist, OH, NO₂, NH₂, NH-C₁-C₂-Alkyl, wobei die Alkylgruppe durch mindestens einen Substituenten aus der Gruppe bestehend aus OH, NH₂, C₁-C₂-Alkyl, CN und COOH substituiert sein kann, oder NHCO-C₁-C₂-Alkyl oder NHCOO-C₁-C₂-Alkyl steht;
Z₅ für Wasserstoff, C₁-C₂-Alkyl oder C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, steht;
G für die direkte Bindung, COO-C₁-C₂-Alkylen, Arylen, Arylen, das durch mindestens einen Substituenten aus der Gruppe bestehend aus Hydroxy, Cyano, NO₂, SO₃H, NH₂, Carboxy, Carbo-C₁-C₂-alkoxy, C₁-C₂-Alkoxy und C₁-C₂-Alkyl substituiert ist, C₁-C₂-Alkylen oder C₁-C₂-Alkylen, das durch mindestens einen Substituenten aus der Gruppe bestehend aus Hydroxy, Cyano, NO₂, SO₃H, NH₂, Carboxy, Carbo-C₁-C₂-alkoxy, C₁-C₂-Alkoxy und C₁-C₂-Alkyl substituiert ist, steht;
n für 0, 1, 2 oder 3 steht;
n' für 0, 1 oder 2 steht und
M jeweils unabhängig voneinander für Wasserstoff, Na⁺ oder K⁺ steht; 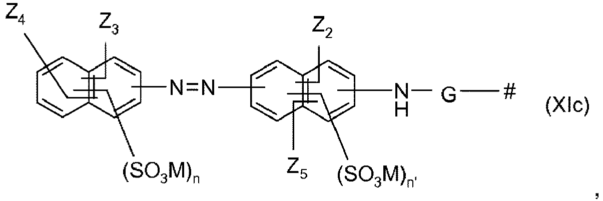
wobei
# den Punkt der Anbindung der Brückengruppe L kennzeichnet;
Z₂ für Wasserstoff, Hydroxy, C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy oder C₁-C₂-Alkoxy, das durch mindestens einen Substituenten aus der Gruppe bestehend aus Hydroxy, Cyano, SO₃H, NH₂, Carboxy, Carbo-C₁-C₄-alkoxy, C₁-C₄-Alkyl, Phenyl, Naphthyl und Pyridyl substituiert ist, oder OH oder NO₂ steht;
Z₃ für Wasserstoff, C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₂-alkoxy, C₁-C₂-Alkyl, Phenyl, Naphthyl und Pyridyl substituiert ist, OH, NO₂, NH₂, NH-C₁-C₂-Alkyl, wobei die Alkylgruppe durch mindestens einen Substituenten aus der Gruppe bestehend aus OH, NH₂, C₁-C₂-Alkyl, CN und COOH substituiert sein kann, oder NHCO-C₁-C₂-Alkyl oder NHCOO-C₁-C₂-Alkyl steht;
Z₄ für Wasserstoff, C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₄-alkoxy, C₁-C₄-Alkyl, Phenyl, Naphthyl und Pyridyl substituiert ist, OH, NO₂, NH₂, NH-C₁-C₂-Alkyl, wobei die Alkylgruppe durch mindestens einen Substituenten aus der Gruppe bestehend aus OH, NH₂, C₁-C₂-Alkyl, CN und COOH substituiert sein kann, oder NHCO-C₁-C₂-Alkyl oder NHCOO-C₁-C₂-Alkyl steht;
Z₅ für Wasserstoff, C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₄-Alkoxy, C₁-C₄-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, oder NO₂ steht;
G für die direkte Bindung, COO-C₁-C₂-Alkylen, Arylen, Arylen, das durch mindestens einen Substituenten aus der Gruppe bestehend aus Hydroxy, Cyano, NO₂, SO₃H, NH₂, Carboxy, Carbo-C₁-C₂-alkoxy, C₁-C₂-Alkoxy und C₁-C₂-Alkyl substituiert ist, C₁-C₂-Alkylen oder C₁-C₂-Alkylen, das durch mindestens einen Substituenten aus der Gruppe bestehend aus Hydroxy, Cyano, NO₂, SO₃H, NH₂, Carboxy, Carbo-C₁-C₂-alkoxy, C₁-C₂-Alkoxy und C₁-C₂-Alkyl substituiert ist, steht;
n für 0, 1, 2 oder 3 steht;
n' für 0, 1 oder 2 steht und
M jeweils unabhängig voneinander für Na⁺ oder K⁺ steht; 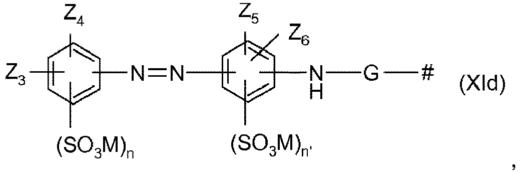
wobei
# den Punkt der Anbindung der Brückengruppe L kennzeichnet;
Z₃ für Wasserstoff, C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₄-alkoxy, C₁-C₄-Alkyl, Phenyl, Naphthyl und Pyridyl substituiert ist, oder SO₂CH₂CH₂SO₃H oder NO₂ steht;
Z₄ für C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₄-alkoxy, C₁-C₄-Alkyl, Phenyl, Naphthyl und Pyridyl substituiert ist, OH oder SO₂CH₂CH₂SO₃H oder NO₂ steht;
Z₅ für Wasserstoff, C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₄-alkoxy, C₁-C₄-Alkyl, Phenyl, Naphthyl und Pyridyl substituiert ist, OH, NO₂, NH₂, NH-C₁-C₂-Alkyl, wobei die Alkylgruppe durch mindestens einen Substituenten aus der Gruppe bestehend aus OH, NH₂, C₁-C₂-Alkyl, CN und COOH substituiert sein kann, oder NHCO-C₁-C₂-Alkyl oder NHCOO-C₁-C₂-Alkyl steht;
Z₆ für C₁-C₂-Alkyl, C₁-C₂-Alkyl, das durch mindestens einen Substituenten aus der Gruppe bestehend aus Hydroxy, Cyano, SO₃H, NH₂, Carboxy, Carbo-C₁-C₂-alkoxy, C₁-C₂-Alkoxy, Phenyl, Naphthyl und Pyridyl substituiert ist, C₁-C₂-Alkoxy, C₁-C₂-Alkoxy, das durch mindestens einen Substituenten aus der Gruppe bestehend aus Hydroxy, Cyano, SO₃H, NH₂, Carboxy, Carbo-C₁-C₄-alkoxy, C₁-C₄-Alkyl, Phenyl, Naphthyl und Pyridyl substituiert ist, oder NO₂ steht;
G für die direkte Bindung, -COO-C₁-C₂-Alkylen, Arylen, Arylen, das durch mindestens einen Substituenten aus der Gruppe bestehend aus Hydroxy, Cyano, NO₂, SO₃H, NH₂, Carboxy, Carbo-C₁-C₂-alkoxy, C₁-C₂-Alkoxy und C₁-C₂-Alkyl substituiert ist, C₁-C₂-Alkylen oder C₁-C₂-Alkylen, das durch mindestens einen Substituenten aus der Gruppe bestehend aus Hydroxy, Cyano, NO₂, SO₃H, NH₂, Carboxy, Carbo-C₁-C₂-alkoxy, C₁-C₂-Alkoxy und C₁-C₂-Alkyl substituiert ist, steht;
n für 0, 1, 2 oder 3 steht;
n' für 0, 1 oder 2 steht und
M jeweils unabhängig voneinander für Wasserstoff, Na⁺ oder K⁺ steht.

11. Teilchen nach Anspruch 4, wobei D aus der Gruppe bestehend aus Verbindungen ausgewählt sind, in denen die Teilformeln 10, 11, 12, 13 und 14: 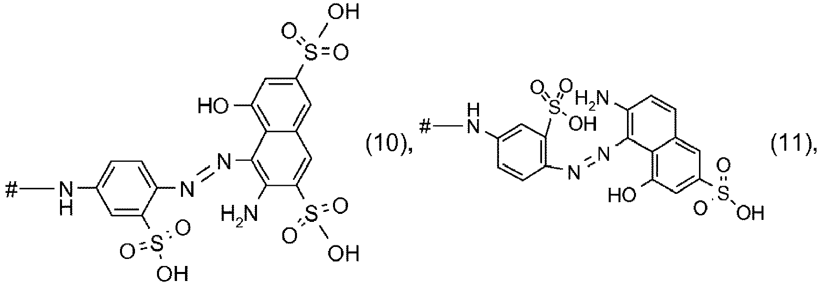 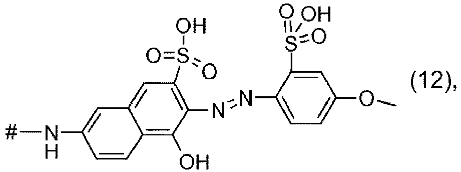 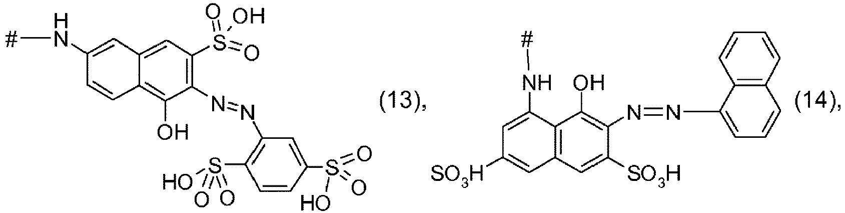 vorliegen und # den Punkt der Anbindung der Brückengruppe L kennzeichnet.

12. Teilchen nach einem der Ansprüche 1 bis 11, wobei die Gelatinekomponente b) eine Bloom-Festigkeit von 2 bis 50 aufweist.

13. Teilchen nach einem der Ansprüche 1 bis 11, wobei die Gelatinekomponente b) eine Bloom-Festigkeit von 5 bis 50 aufweist.

14. Teilchen nach einem der Ansprüche 2 bis 13, wobei es sich bei der Ölkomponente c) um ein Triglyceridöl handelt.

15. Teilchen nach einem der Ansprüche 2 bis 14, wobei es sich bei der Bepuderungsmittelkomponente d) um Stärke oder modifizierte Stärke handelt.

16. Teilchen nach einem der Ansprüche 2 bis 15, wobei die weiteren Additive der Komponente e) aus der Gruppe bestehend aus anionischen Dispergiermitteln, Sprengmitteln, Füllstoffen, wasserunlöslichen oder wasserlöslichen Farbstoffen oder Pigmenten, optischen Aufhellern, Zeolithen, Talk, pulverförmiger Cellulose, faserförmiger Cellulose, mikrokristalliner Cellulose, Stärke, Dextrin, Kaolin, TiO₂, SiO₂ und Magnesiumtrisilikat ausgewählt sind.

17. Verfahren zur Herstellung von Teilchen nach Anspruch 1, bei dem man
i) mindestens eine wasserlösliche Phthalocyaninverbindung in einem wässrigen Medium löst,
ii) Gelatine mit einer Bloom-Festigkeit von 2 bis 80 in der erhaltenen Lösung löst oder eine wässrige Lösung der Gelatine zugibt,
iii) die so erhaltene Mischung in Tröpfchen umwandelt und
iv) den Feuchtigkeitsgehalt der erhaltenen Teilchen verringert.

18. Waschmittelzusammensetzung, umfassend
A) Teilchen gemäß Anspruch 1 und
B) weitere Additive, die für die Herstellung von Waschmitteln geeignet sind.

19. Waschmittelzusammensetzung nach Anspruch 18, umfassend
A) 0,001 bis 1,0 Gew.-% Teilchen gemäß Anspruch 1 und
B) 99,0 bis 99,999 Gew.-% weitere Additive, die für die Herstellung von Waschmitteln geeignet sind.

## Revendications

1. Particules de phtalocyanine encapsulées, lesdites particules comprenant
a) au moins un composé de phtalocyanine hydrosoluble et
b) de la gélatine ayant une force bloom de 2 à 80 en tant que matériau d'encapsulation.

2. Particules selon la revendication 1, comprenant
a) 0,1-20 % en poids d'au moins un composé de phtalocyanine hydrosoluble ;
b) 5-60 % en poids de gélatine ayant une force bloom de 2 à 80 ;
c) 0-10 % en poids d'une huile,
d) 0-90 % en poids d'un agent de poudrage,
e) 0-90 % en poids d'autres additifs appropriés pour la préparation d'agglomérats solides et
f) 0-15 % en poids d'eau,
à condition que la somme des composants a), b), c), d), e) et f) s'élève à 100 % en poids.

3. Particules selon la revendication 1 ou 2, comprenant
a) 1-15 % en poids d'au moins un composé de phtalocyanine hydrosoluble ;
b) 5-50 % en poids de gélatine ayant une force bloom de 2 à 80 ;
c) 0,1-5 % en poids d'une huile,
d) 1-90 % en poids d'un agent de poudrage,
e) 0-90 % en poids d'autres additifs appropriés pour la préparation d'agglomérats solides et
f) 0,1-15 % en poids d'eau,
à condition que la somme des composants a), b), c), d), e) et f) s'élève à 100 % en poids.

4. Particules selon l'une quelconque des revendications 1 à 3, comprenant, en tant que composé de phtalocyanine hydrosoluble a), au moins un composé complexe de phtalocyanine représenté par la formule
(PC)-L-(D) (1),
auquel le substituant d'au moins un colorant monoazoïque est attaché par le groupe de liaison L, dans lequel
PC représente la structure phtalocyanine contenant du métal Zn(II), Fe(II), Ca(II), Mg(II), Na(I), K(I), Al, Si(IV), P(V), Ti(IV) ou Cr(VI) ;
D représente le substituant d'un colorant monoazoïque ; et
L représente un groupe 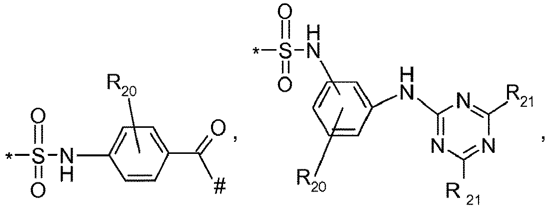 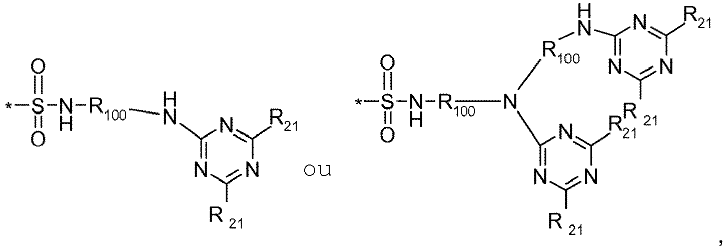
dans lequel
R₂₀ représente l'hydrogène, un alkyle en C₁-C₈, un alcoxy en C₁-C₈ ou un halogène ;
R₂₁ représente D, l'hydrogène, OH, Cl ou F, à condition qu'au moins l'un soit D ;
R₁₀₀ représente un alkylène en C₁-C₈ ;
* marque le point d'attache de PC ; et
# marque le point d'attache du substituant D issu du colorant monoazoïque.

5. Particules selon la revendication 4, dans lesquelles le composé complexe de phtalocyanine hydrosoluble (1) correspond à la formule 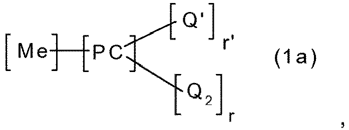 dans laquelle
PC représente la structure porphyrine,
Me représente l'atome métallique central ou le groupe métallique central relié à PC par une liaison de coordination, qui est choisi dans le groupe constitué par Zn, Fe, Ca, Mg, Na, K, Al-Z₁, Si(IV)-(Z₁)₂, Ti(IV)-(Z₁)₂ et Sn(IV)-(Z₁)₂ ;
Z₁ représente un alcanolate en C₁-C₈, OH-, R₀COO-, ClO₄⁻, BF₄⁻, PF₆⁻, R₀SO₃⁻, SO₄²⁻, NO₃⁻, F-, Cl⁻, Br-, I-, l'ion citrate, l'ion tartrate ou l'ion oxalate, R₀ étant l'hydrogène ou un alkyle en C₁-C₁₈ ;
r représente 0 ou un nombre de 1 à 3 ;
r' représente un nombre de 1 à 4 ;
chaque Q₂ représente indépendamment des autres -SO₃-M⁺ ou le groupe -(CH₂)ₘ-COO⁻M⁺ ; M⁺ étant H⁺, un ion de métal alcalin ou l'ion ammonium et m étant 0 ou un nombre de 1 à 12 ;
chaque Q' représente indépendamment des autres le segment représenté par la formule partielle L-D, dans laquelle
D représente le substituant d'un colorant monoazoïque ; et
L représente un groupe 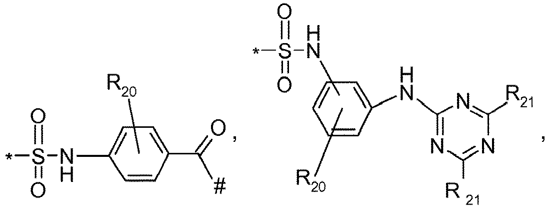 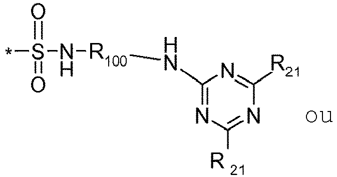 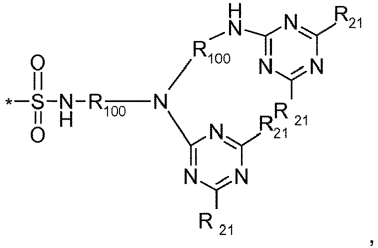
dans lequel
R₂₀ représente l'hydrogène, un alkyle en C₁-C₈, un alcoxy en C₁-C₈ ou un halogène ;
R₂₁ représente D, l'hydrogène, OH, Cl ou F, à condition qu'au moins l'un des R₂₁ soit D ;
R₁₀₀ représente un alkylène en C₁-C₈ ;
* marque le point d'attache de Me-PC ; et
# marque le point d'attache du substituant D issu du colorant monoazoïque.

6. Particules selon la revendication 4, dans lesquelles le composé complexe de phtalocyanine hydrosoluble (1) correspond à la formule (2a) 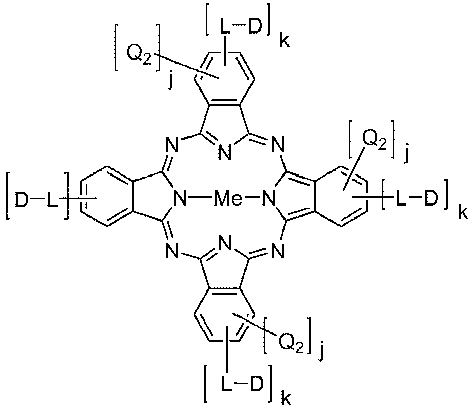 dans laquelle
Me représente Zn, Al-Z₁, Si(IV)-(Z₁)₂ ou Ti(IV)-(Z₁)₂, Z₁ étant l'ion chlorure, fluorure, bromure ou hydroxyde ;
chaque Q₂ représente indépendamment des autres -SO₃-M⁺ ou le groupe - (CH₂)ₘ-COO⁻M⁺, M⁺ étant H⁺, un ion de métal alcalin ou l'ion ammonium et m étant 0 ou un nombre de 1 à 12 ;
chaque k est indépendamment choisi entre 0 et 1, chaque j est indépendamment choisi entre 0 et 1-k,
D représente le substituant d'un colorant monoazoïque ; et
L représente un groupe 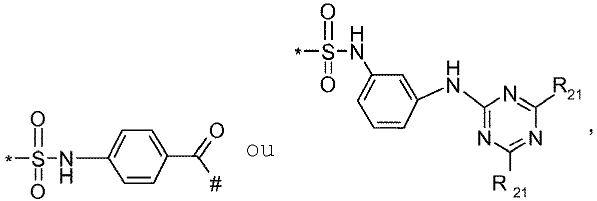 dans lequel
R₂₁ représente D, l'hydrogène, OH, Cl ou F, à condition qu'au moins l'un soit D ;
* marque le point d'attache de PC ; et
# marque le point d'attache à D.

7. Particules selon la revendication 4, dans lesquelles le composé complexe de phtalocyanine hydrosoluble (1) correspond à la formule 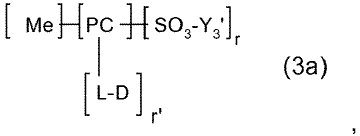 dans laquelle
PC, L et D sont tels que définis dans la revendication 4 ;
Me est Zn ou Al-Z₁, Z₁ étant le chlore, le fluor, le brome ou un groupe hydroxy ;
Y₃' est l'hydrogène ; un ion de métal alcalin ou un ion ammonium ;
r est zéro ou un nombre de 1-3 ; et
r' est un nombre de 1 à 4.

8. Particules selon la revendication 6 ou 7, dans lesquelles Me représente Zn.

9. Particules selon la revendication 4, dans lesquelles D représente le substituant d'un colorant monoazoïque représenté par les formules partielles Xa, Xb, Xc ou Xd : 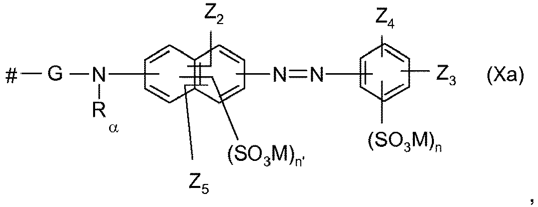 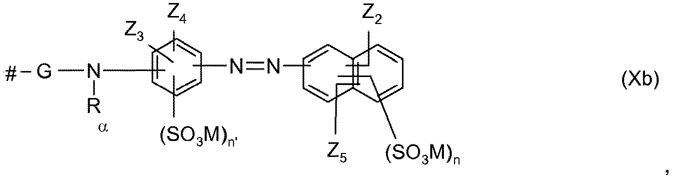 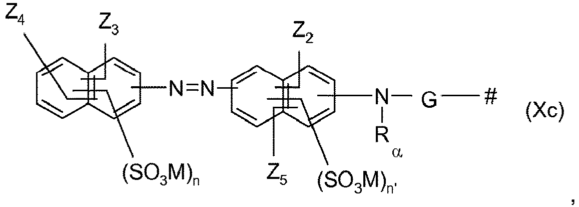 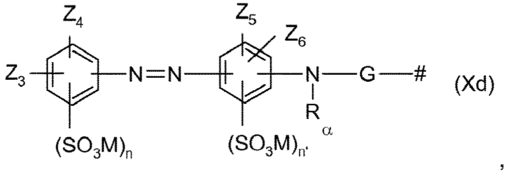 dans lesquelles
# marque le point d'attache du groupe de pontage L ;
R_{α} représente l'hydrogène, un alkyle en C₁-C₄, un alkyle en C₁-C₂ qui est substitué par au moins un substituant choisi dans le groupe constitué par hydroxy, cyano, SO₃H, NH₂, carboxy, carbo(alcoxy en C₁-C₄), alcoxy en C₁-C₄, phényle, naphtyle et pyridyle, un alkyle en C₃-C₄ à chaîne droite ou ramifié qui est substitué par au moins un substituant choisi dans le groupe constitué par hydroxy, cyano, SO₃H, NH₂, carboxy, carbo(alcoxy en C₁-C₄), alcoxy en C₁-C₄, phényle, naphtyle et pyridyle, un aryle, un aryle qui est substitué par au moins un substituant choisi dans le groupe constitué par hydroxy, cyano, SO₃H, NH₂, carboxy, carbo(alcoxy en C₁-C₄), alcoxy en C₁-C₄ et alkyle en C₁-C₄ ;
Z₂, Z₃, Z₄, Z₅ et Z₆ représentent chacun indépendamment des autres l'hydrogène, un groupe hydroxy, un alkyle en C₁-C₄, un alkyle en C₁-C₂ qui est substitué par au moins un substituant choisi dans le groupe constitué par hydroxy, cyano, SO₃H, NH₂, carboxy, carbo (alcoxy en C₁-C₄), alcoxy en C₁-C₄, phényle, naphtyle et pyridyle, un alkyle en C₃-C₄ à chaîne droite ou ramifié qui est substitué par au moins un substituant choisi dans le groupe constitué par hydroxy, cyano, SO₃H, NH₂, carboxy, carbo (alcoxy en C₁-C₄), alcoxy en C₁-C₄, phényle, naphtyle et pyridyle, un alcoxy en C₁-C₄, un alcoxy en C₁-C₂ qui est substitué par au moins un substituant choisi dans le groupe constitué par hydroxy, cyano, SO₃H, NH₂, carboxy, carbo(alcoxy en C₁-C₄), alcoxy en C₁-C₄, phényle, naphtyle et pyridyle, un alcoxy en C₃-C₄ à chaîne droite ou ramifié qui est substitué par au moins un substituant choisi dans le groupe constitué par hydroxy, cyano, SO₃H, NH₂, carboxy, carbo(alcoxy en C₁-C₄), alcoxy en C₁-C₄, phényle, naphtyle et pyridyle, un halogène, -SO₂CH₂CH₂SO₃H, NO₂, COOH,-COO(alkyle en C₁-C₄), NH₂, NH (alkyle en C₁-C₄), le groupe alkyle pouvant être substitué par au moins un substituant choisi dans le groupe constitué par OH, NH₂, alkyle en C₁-C₄, CN et COOH, N(alkyl en C₁-C₄)(alkyle en C₁-C₄), les groupes alkyle pouvant être indépendamment les uns des autres substitués par au moins un substituant choisi dans le groupe constitué par OH, NH₂, alkyle en C₁-C₄, CN et COOH, NH-aryle, NH-aryle, l'aryle étant substitué par au moins un substituant choisi dans le groupe constitué par hydroxy, cyano, SO₃H, NH₂, carboxy, carbo(alcoxy en C₁-C₄), alkyle en C₁-C₄ et alcoxy en C₁-C₄, ou représentent chacun NHCO(alkyle en C₁-C₄) ou NHCOO(alkyle en C₁-C₄) ;
G représente la liaison directe, -COO(alkylène en C₁-C₄), un arylène ; un arylène qui est substitué par au moins un substituant choisi dans le groupe constitué par hydroxy, cyano, NO₂, SO₃H, NH₂, carboxy, carbo(alcoxy en C₁-C₄), alcoxy en C₁-C₄ et alkyle en C₁-C₄, un alkylène en C₁-C₄, un alkylène en C₁-C₄ qui est substitué par au moins un substituant choisi dans le groupe constitué par hydroxy, cyano, NO₂, SO₃H, NH₂, carboxy, carbo(alcoxy en C₁-C₄), alcoxy en C₁-C₄ et alkyle en C₁-C₄ ou représente -CO-arylène ;
n représente 0 ; 1 ; 2 ou 3 ;
n' représente 0 ; 1 ou 2 ; et
chaque M représente indépendamment des autres l'hydrogène ; un ion de métal alcalin ou un ion ammonium.

10. Particules selon la revendication 4, dans lesquelles D représente le substituant d'un colorant monoazoïque représenté par les formules partielles XIa, XIb, XIc ou XId : 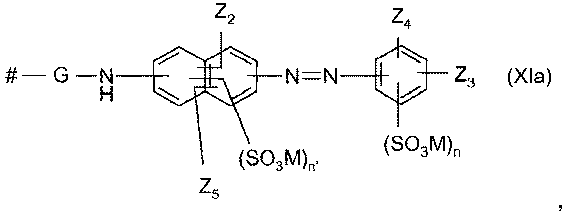 dans laquelle
# marque le point d'attache du groupe de pontage L ;
Z₂ représente un alkyle en C₁-C₂, un alkyle en C₁-C₂ qui est substitué par au moins un substituant choisi dans le groupe constitué par hydroxy, cyano, SO₃H, NH₂, carboxy, carbo (alcoxy en C₁-C₂), alcoxy en C₁-C₂, phényle, naphtyle et pyridyle, un alcoxy en C₁-C₂, un alcoxy en C₁-C₂ qui est substitué par au moins un substituant choisi dans le groupe constitué par hydroxy, cyano, SO₃H, NH₂, carboxy, carbo (alcoxy en C₁-C₂), alkyle en C₁-C₂, phényle, naphtyle et pyridyle ou représente OH ;
Z₃ représente l'hydrogène, un alkyle en C₁-C₂, un alkyle en C₁-C₂ qui est substitué par au moins un substituant choisi dans le groupe constitué par hydroxy, cyano, SO₃H, NH₂, carboxy, carbo(alcoxy en C₁-C₂), alcoxy en C₁-C₂, phényle, naphtyle et pyridyle, un alcoxy en C₁-C₂, un alcoxy en C₁-C₂ qui est substitué par au moins un substituant choisi dans le groupe constitué par hydroxy, cyano, SO₃H, NH₂, carboxy, carbo (alcoxy en C₁-C₂), alkyle en C₁-C₂, phényle, naphtyle et pyridyle, OH, NO₂, NH₂, NH(alkyle en C₁-C₂), le groupe alkyle pouvant être substitué par au moins un substituant choisi dans le groupe constitué par OH, NH₂, alkyle en C₁-C₂, CN et COOH, ou représente NHCO(alkyle en C₁-C₂) ou NHCOO(alkyle en C₁-C₂) ;
Z₄ représente l'hydrogène, un alkyle en C₁-C₂, un alkyle en C₁-C₂ qui est substitué par au moins un substituant choisi dans le groupe constitué par hydroxy, cyano, SO₃H, NH₂, carboxy, carbo(alcoxy en C₁-C₂), alcoxy en C₁-C₂, phényle, naphtyle et pyridyle, un alcoxy en C₁-C₂, un alcoxy en C₁-C₂ qui est substitué par au moins un substituant choisi dans le groupe constitué par hydroxy, cyano, SO₃H, NH₂, carboxy, carbo (alcoxy en C₁-C₄), alkyle en C₁-C₄, phényle, naphtyle et pyridyle, OH, NO₂, NH₂, NH(alkyle en C₁-C₂), le groupe alkyle pouvant être substitué par au moins un substituant choisi dans le groupe constitué par OH, NH₂, alkyle en C₁-C₂, CN et COOH, ou représente NHCO(alkyle en C₁-C₂) ou NHCOO(alkyle en C₁-C₂) ;
Z₅ représente l'hydrogène, un alkyle en C₁-C₂,un alkyle en C₁-C₂ qui est substitué par au moins un substituant choisi dans le groupe constitué par hydroxy, cyano, SO₃H, NH₂, carboxy, carbo(alcoxy en C₁-C₂), alcoxy en C₁-C₂,phényle, naphtyle et pyridyle ;
G représente la liaison directe, COO(alkylène en C₁-C₂), un arylène, un arylène qui est substitué par au moins un substituant choisi dans le groupe constitué par hydroxy, cyano, NO₂, SO₃H, NH₂, carboxy, carbo(alcoxy en C₁-C₂), alcoxy en C₁-C₂ et alkyle en C₁-C₂,un alkylène en C₁-C₂ ou un alkylène en C₁-C₂ qui est substitué par au moins un substituant choisi dans le groupe constitué par hydroxy, cyano, NO₂, SO₃H, NH₂, carboxy, carbo (alcoxy en C₁-C₂), alcoxy en C₁-C₂ et alkyle en C₁-C₂ ;
n représente 0, 1, 2 ou 3 ;
n' représente 0, 1 ou 2 ; et
chaque M représente indépendamment des autres l'hydrogène, Na⁺ ou K⁺ ; 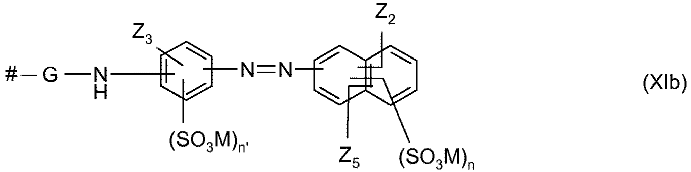
dans laquelle
# marque le point d'attache du groupe de pontage L ;
Z₂ représente un alkyle en C₁-C₂,un alkyle en C₁-C₂ qui est substitué par au moins un substituant choisi dans le groupe constitué par hydroxy, cyano, SO₃H, NH₂, carboxy, carbo (alcoxy en C₁-C₂), alcoxy en C₁-C₂,phényle, naphtyle et pyridyle, un alcoxy en C₁-C₂, un alcoxy en C₁-C₂ qui est substitué par au moins un substituant choisi dans le groupe constitué par hydroxy, cyano, SO₃H, NH₂, carboxy, carbo (alcoxy en C₁-C₂), alkyle en C₁-C₂, phényle, naphtyle et pyridyle ou représente OH ;
Z₃ est l'hydrogène, un alkyle en C₁-C₂,un alkyle en C₁-C₂ qui est substitué par au moins un substituant choisi dans le groupe constitué par hydroxy, cyano, SO₃H, NH₂, carboxy, carbo (alcoxy en C₁-C₂), alcoxy en C₁-C₂,phényle, naphtyle et pyridyle, un alcoxy en C₁-C₂, un alcoxy en C₁-C₂ qui est substitué par au moins un substituant choisi dans le groupe constitué par hydroxy, cyano, SO₃H, NH₂, carboxy, carbo (alcoxy en C₁-C₂), alkyle en C₁-C₂, phényle, naphtyle et pyridyle, OH, NO₂, NH₂, NH(alkyle en C₁-C₂), le groupe alkyle pouvant être substitué par au moins un substituant choisi dans le groupe constitué par OH, NH₂, alkyle en C₁-C₂, CN ou COOH, ou représente NHCO(alkyle en C₁-C₂) ou NHCOO(alkyle en C₁-C₂) ;
Z₅ représente l'hydrogène, un alkyle en C₁-C₂,un alkyle en C₁-C₂ qui est substitué par au moins un substituant choisi dans le groupe constitué par hydroxy, cyano, SO₃H, NH₂, carboxy, carbo(alcoxy en C₁-C₂), alcoxy en C₁-C₂,phényle, naphtyle et pyridyle ;
G représente la liaison directe, COO(alkylène en C₁-C₂), un arylène, un arylène qui est substitué par au moins un substituant choisi dans le groupe constitué par hydroxy, cyano, NO₂, SO₃H, NH₂, carboxy, carbo(alcoxy en C₁-C₂), alcoxy en C₁-C₂ et alkyle en C₁-C₂,un alkylène en C₁-C₂ ou un alkylène en C₁-C₂ qui est substitué par au moins un substituant choisi dans le groupe constitué par hydroxy, cyano, NO₂, SO₃H, NH₂, carboxy, carbo(alcoxy en C₁-C₂), alcoxy en C₁-C₂ et alkyle en C₁-C₂ ;
n représente 0, 1, 2 ou 3 ;
n' représente 0, 1 ou 2 ; et
chaque M représente indépendamment des autres l'hydrogène, Na⁺ ou K⁺ ; 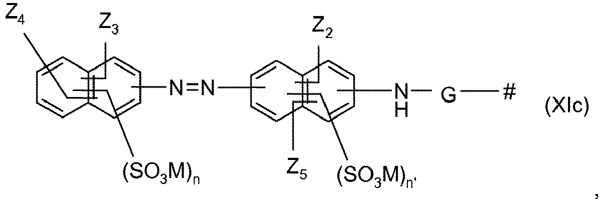
dans laquelle
# marque le point d'attache du groupe de pontage L ;
Z₂ représente l'hydrogène, le groupe hydroxy, un alkyle en C₁-C₂, un alkyle en C₁-C₂ qui est substitué par au moins un substituant choisi dans le groupe constitué par hydroxy, cyano, SO₃H, NH₂, carboxy, carbo (alcoxy en C₁-C₂), alcoxy en C₁-C₂, phényle, naphtyle et pyridyle, un alcoxy en C₁-C₂ ou un alcoxy en C₁-C₂ qui est substitué par au moins un substituant choisi dans le groupe constitué par hydroxy, cyano, SO₃H, NH₂, carboxy, carbo (alcoxy en C₁-C₄), alkyle en C₁-C₄, phényle, naphtyle et pyridyle ou représente OH ou NO₂ ;
Z₃ représente l'hydrogène, un alkyle en C₁-C₂,un alkyle en C₁-C₂ qui est substitué par au moins un substituant choisi dans le groupe constitué par hydroxy, cyano, SO₃H, NH₂, carboxy, carbo(alcoxy en C₁-C₂), alcoxy en C₁-C₂,phényle, naphtyle et pyridyle, un alcoxy en C₁-C₂,un alcoxy en C₁-C₂ qui est substitué par au moins un substituant choisi dans le groupe constitué par hydroxy, cyano, SO₃H, NH₂, carboxy, carbo(alcoxy en C₁-C₂), alkyle en C₁-C₂, phényle, naphtyle et pyridyle, OH, NO₂, NH₂, NH(alkyle en C₁-C₂), le groupe alkyle pouvant être substitué par au moins un substituant choisi dans le groupe constitué par OH, NH₂, alkyle en C₁-C₂, CN et COOH, ou représente NHCO(alkyle en C₁-C₂) ou NHCOO(alkyle en C₁-C₂) ;
Z₄ représente l'hydrogène, un alkyle en C₁-C₂,un alkyle en C₁-C₂ qui est substitué par au moins un substituant choisi dans le groupe constitué par hydroxy, cyano, SO₃H, NH₂, carboxy, carbo(alcoxy en C₁-C₂), alcoxy en C₁-C₂,phényle, naphtyle et pyridyle, un alcoxy en C₁-C₂ ou un alcoxy en C₁-C₂ qui est substitué par au moins un substituant choisi dans le groupe constitué par hydroxy, cyano, SO₃H, NH₂, carboxy, carbo (alcoxy en C₁-C₄), alkyle en C₁-C₄, phényle, naphtyle et pyridyle, OH, NO₂, NH₂, NH (alkyle en C₁-C₂), le groupe alkyle pouvant être substitué par au moins un substituant choisi dans le groupe constitué par OH, NH₂, alkyle en C₁-C₂,CN et COOH, ou représente NHCO(alkyle en C₁-C₂) ou NHCOO(alkyle en C₁-C₂) ;
Z₅ représente l'hydrogène, un alkyle en C₁-C₂,un alkyle en C₁-C₂ qui est substitué par au moins un substituant choisi dans le groupe constitué par hydroxy, cyano, SO₃H, NH₂, carboxy, carbo(alcoxy en C₁-C₂), alcoxy en C₁-C₂,phényle, naphtyle et pyridyle, un alcoxy en C₁-C₂,un alcoxy en C₁-C₂ qui est substitué par au moins un substituant choisi dans le groupe constitué par hydroxy, cyano, SO₃H, NH₂, carboxy, carbo (alcoxy en C₁-C₄), alkyle en C₁-C₄, phényle, naphtyle et pyridyle ou représente NO₂ ;
G représente la liaison directe, COO(alkylène en C₁-C₂), un arylène, un arylène qui est substitué par au moins un substituant choisi dans le groupe constitué par hydroxy, cyano, NO₂, SO₃H, NH₂, carboxy, carbo(alcoxy en C₁-C₂), alcoxy en C₁-C₂ et alkyle en C₁-C₂,un alkylène en C₁-C₂ ou un alkylène en C₁-C₂ qui est substitué par au moins un substituant choisi dans le groupe constitué par hydroxy, cyano, NO₂, SO₃H, NH₂, carboxy, carbo (alcoxy en C₁-C₂), alcoxy en C₁-C₂ et alkyle en C₁-C₂,
n représente 0, 1, 2 ou 3 ;
n' représente 0, 1 ou 2 ; et
chaque M représente indépendamment des autres Na⁺ ou K⁺ ; 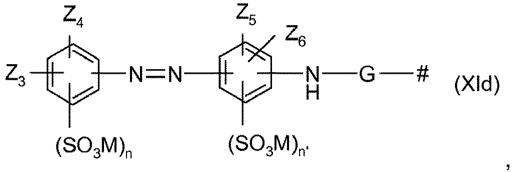
dans laquelle
# marque le point d'attache du groupe de pontage L ;
Z₃ représente l'hydrogène, un alkyle en C₁-C₂,un alkyle en C₁-C₂ qui est substitué par au moins un substituant choisi dans le groupe constitué par hydroxy, cyano, SO₃H, NH₂, carboxy, carbo(alcoxy en C₁-C₂), alcoxy en C₁-C₂,phényle, naphtyle et pyridyle, un alcoxy en C₁-C₂,un alcoxy en C₁-C₂ qui est substitué par au moins un substituant choisi dans le groupe constitué par hydroxy, cyano, SO₃H, NH₂, carboxy, carbo(alcoxy en C₁-C₄), alkyle en C₁-C₄, phényle, naphtyle et pyridyle ou représente SO₂CH₂CH₂SO₃H ou NO₂ ;
Z₄ représente un alkyle en C₁-C₂,un alkyle en C₁-C₂ qui est substitué par au moins un substituant choisi dans le groupe constitué par hydroxy, cyano, SO₃H, NH₂, carboxy, carbo (alcoxy en C₁-C₂), alcoxy en C₁-C₂,phényle, naphtyle et pyridyle, un alcoxy en C₁-C₂, un alcoxy en C₁-C₂ qui est substitué par au moins un substituant choisi dans le groupe constitué par hydroxy, cyano, SO₃H, NH₂, carboxy, carbo (alcoxy en C₁-C₄), alkyle en C₁-C₄, phényle, naphtyle et pyridyle, OH ou représente SO₂CH₂CH₂SO₃H ou NO₂ ;
Z₅ représente l'hydrogène, un alkyle en C₁-C₂, un alkyle en C₁-C₂ qui est substitué par au moins un substituant choisi dans le groupe constitué par hydroxy, cyano, SO₃H, NH₂, carboxy, carbo(alcoxy en C₁-C₂), alcoxy en C₁-C₂, phényle, naphtyle et pyridyle, un alcoxy en C₁-C₂, un alcoxy en C₁-C₂ qui est substitué par au moins un substituant choisi dans le groupe constitué par hydroxy, cyano, SO₃H, NH₂, carboxy, carbo (alcoxy en C₁-C₄), alkyle en C₁-C₄, phényle, naphtyle et pyridyle, OH, NO₂, NH₂, NH(alkyle en C₁-C₂), le groupe alkyle pouvant être substitué par au moins un substituant choisi dans le groupe constitué par OH, NH₂, alkyle en C₁-C₂, CN et COOH, ou représente NHCO(alkyle en C₁-C₂) ou NHCOO(alkyle en C₁-C₂) ;
Z₆ représente un alkyle en C₁-C₂, un alkyle en C₁-C₂ qui est substitué par au moins un substituant choisi dans le groupe constitué par hydroxy, cyano, SO₃H, NH₂, carboxy, carbo (alcoxy en C₁-C₂), alcoxy en C₁-C₂, phényle, naphtyle et pyridyle, un alcoxy en C₁-C₂, un alcoxy en C₁-C₂ qui est substitué par au moins un substituant choisi dans le groupe constitué par hydroxy, cyano, SO₃H, NH₂, carboxy, carbo (alcoxy en C₁-C₄), alkyle en C₁-C₄, phényle, naphtyle et pyridyle ou représente NO₂ ;
G représente la liaison directe, COO(alkylène en C₁-C₂), un arylène, un arylène qui est substitué par au moins un substituant choisi dans le groupe constitué par hydroxy, cyano, NO₂, SO₃H, NH₂, carboxy, carbo(alcoxy en C₁-C₂), alcoxy en C₁-C₂ et alkyle en C₁-C₂, un alkylène en C₁-C₂ ou un alkylène en C₁-C₂ qui est substitué par au moins un substituant choisi dans le groupe constitué par hydroxy, cyano, NO₂, SO₃H, NH₂, carboxy, carbo (alcoxy en C₁-C₂), alcoxy en C₁-C₂ et alkyle en C₁-C₂ ;
n représente 0, 1, 2 ou 3 ;
n' représente 0, 1 ou 2 ; et
chaque M représente indépendamment des autres l'hydrogène, Na⁺ ou K⁺.

11. Particules selon la revendication 4, dans lesquelles D est choisi dans le groupe constitué par les composés dans lesquels les formules partielles 10, 11, 12, 13 et 14 : 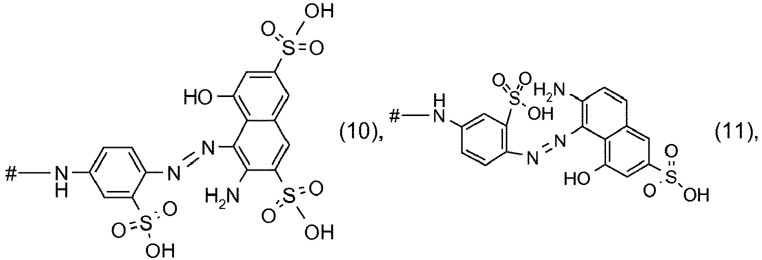 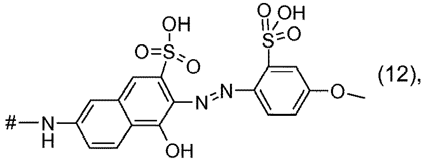 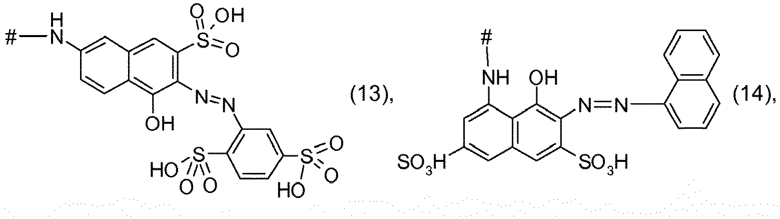 sont présentes et dans lesquels # marque le point d'attache du groupe de pontage L.

12. Particules selon l'une quelconque des revendications 1 à 11, dans lesquelles le composant gélatine b) a une force bloom de 2 à 50.

13. Particules selon l'une quelconque des revendications 1 à 11, dans lesquelles le composant gélatine b) a une force bloom de 5 à 50.

14. Particules selon l'une quelconque des revendications 2 à 13, dans lesquelles le composant huileux c) est une huile triglycéridique.

15. Particules selon l'une quelconque des revendications 2 à 14, dans lesquelles le composant agent de poudrage d) est de l'amidon ou de l'amidon modifié.

16. Particules selon l'une quelconque des revendications 2 à 15, dans lesquelles les autres additifs du composant e) sont choisis dans le groupe constitué par les dispersants anioniques, les délitants, les charges, les colorants ou pigments insolubles dans l'eau ou hydrosolubles ; les azurants optiques, les zéolites, le talc, la cellulose en poudre, la cellulose fibreuse, la cellulose microcristalline, l'amidon, la dextrine, le kaolin, TiO₂, SiO₂ et le trisilicate de magnésium.

17. Procédé pour la préparation de particules selon la revendication 1, comprenant
i) la dissolution d'au moins un composé de phtalocyanine hydrosoluble dans un milieu aqueux,
ii) la dissolution de gélatine ayant une force bloom de 2 à 80 dans la solution résultante ou l'ajout d'une solution aqueuse de ladite gélatine,
iii) la conversion du mélange ainsi obtenu en gouttelettes et
iv) la réduction de la teneur en humidité des particules résultantes.

18. Composition d'agent de lavage, comprenant
A) des particules telles que définies dans la revendication 1 ; et
B) d'autres additifs appropriés pour la préparation d'agents de lavage.

19. Composition d'agent de lavage selon la revendication 18, comprenant
A) 0,001 à 1,0 % en poids de particules telles que définies dans la revendication 1 ; et
B) 99,0 à 99,999 % en poids d'autres additifs appropriés pour la préparation d'agents de lavage.
